# EUROPEAN PATENT APPLICATION

(11) **EP 4 835 537 A1**
(43) Date of publication of application: **04.11.2026**
(21) Application number: 24923432.9
(22) Date of filing: 31.10.2024
(51) Int. Cl.: G02B 13/00

(54) **OPTICAL LENS, CAMERA MODULE AND ELECTRONIC DEVICE**

(30) Priority: 08.02.2024 CN 202410178225
(71) Applicant: Huawei Technologies Co., Ltd., Shenzhen, Guangdong 518129 (CN)
(72) Inventor: ZHANG, Kaiyuan, Shenzhen, Guangdong 518129 (CN); KUO, Li-Te, Shenzhen, Guangdong 518129 (CN); ZHANG, Yi, Shenzhen, Guangdong 518129 (CN); DING, Ruiming, Shenzhen, Guangdong 518129 (CN); QIN, Zhenkai, Shenzhen, Guangdong 518129 (CN); ZHANG, Jiali, Shenzhen, Guangdong 518129 (CN); ZHOU, Shaopan, Shenzhen, Guangdong 518129 (CN); ZHAO, Huasong, Shenzhen, Guangdong 518129 (CN); NIHEI, Yasuhide, Shenzhen, Guangdong 518129 (CN); MATSUI, Takumi, Shenzhen, Guangdong 518129 (CN); KAMADA, Kenichi, Shenzhen, Guangdong 518129 (CN); YE, Haishui, Shenzhen, Guangdong 518129 (CN)
(74) Representative: Isarpatent
(86) International application number: PCT/CN2024/129169
(87) International publication number: WO 2025/167228

(57) **Abstract**

An optical lens assembly (110), a camera module (100), and an electronic device (1000) are disclosed, and relate to the field of optical imaging technologies. The optical lens assembly (110) includes: a first lens group (10), a second lens group (20), and a light guide module (50). In a first imaging mode of the optical lens assembly (110), the light guide module (50) is configured to reflect a first light ray from the first lens group (10) to an image sensor (120). In a second imaging mode of the optical lens assembly (110), the light guide module (50) is configured to reflect a second light ray from the second lens group (20) to the image sensor (120). The optical lens assembly (110) in the first imaging mode has an effective focal length different from that in the second imaging mode. The light guide module (50) is further configured to compensate for vibration to implement optical image stabilization. The optical lens assembly (110) can implement optical image stabilization while implementing optical zoom, and has good imaging quality and high imaging definition, thereby improving user experience.

## Description

This application claims priority to Chinese Patent Application No. 202410178225.X, filed with the China National Intellectual Property Administration on February 8, 2024 and entitled "OPTICAL LENS ASSEMBLY, CAMERA MODULE, AND ELECTRONIC DEVICE", which is incorporated herein by reference in its entirety.

### TECHNICAL FIELD

This application relates to the field of electronic device technologies, and in particular, to an optical lens assembly, a camera module, and an electronic device.

### BACKGROUND

Compared with digital zoom (digital zoom) with image quality loss, optical zoom (optical zoom) has no image quality loss, can significantly improve imaging quality, and has become a critical focus for improving photographing performance of an electronic device. In a related technology, an optical lens assembly having an optical zoom capability is provided. The optical lens assembly includes a plurality of front lens groups and an optical path switching element. The plurality of front lens groups have different focal lengths and are disposed in parallel on an object side of the optical path switching element. The optical path switching element can image a light ray from any one of the plurality of front lens groups to an image sensor. An optical zoom function of the optical lens assembly can be achieved by switching the optical path switching element between the plurality of lens groups.

When a user takes a photo or records a video by using a camera module of the electronic device, a captured image is easily blurred due to shake of a hand, shake of a photographed object, or a limitation of a photographing optical environment. An optical image stabilization (optical image stabilization, OIS) technology can well resolve this problem. For the optical lens assembly with the optical zoom function, to further improve photographing quality, how to implement optical image stabilization of the optical lens assembly still needs to be resolved.

### SUMMARY

Embodiments of this application provide an optical lens assembly, a camera module, and an electronic device. The optical lens assembly can implement optical image stabilization while implementing optical zoom, and has good imaging quality and high imaging definition, thereby improving user experience.

According to a first aspect, an optical lens assembly is provided, including a first lens group, a second lens group, and a light guide module, where the optical lens assembly includes a first imaging mode and a second imaging mode, and the first lens group and the second lens group are disposed on an object side of the light guide module. When the optical lens assembly is in the first imaging mode, the light guide module is configured to reflect a first light ray from the first lens group to an image sensor, and when the optical lens assembly is in the second imaging mode, the light guide module is configured to reflect a second light ray from the second lens group to the image sensor. The optical lens assembly has an effective focal length in the first imaging mode different from that in the second imaging mode. The light guide module is further configured to compensate for vibration to implement optical image stabilization.

The optical lens assembly provided in this embodiment of this application includes the first lens group, the second lens group, and the light guide module. The first lens group and the second lens group are disposed on the object side of the light guide module in parallel as a front lens group. The light guide module can reflect a light ray from the first lens group or the second lens group to the image sensor, so that the optical lens assembly can perform imaging through the first lens group or the second lens group, in other words, the optical lens assembly can enter the first imaging mode or the second imaging mode. However, the optical lens assembly has an effective focal length in the first imaging mode different from that in the second imaging mode. In other words, when the image sensor receives light rays from different front lens groups, the optical lens assembly has different effective focal lengths. Therefore, the optical lens assembly has an optical zoom capability, and the optical lens assembly can use different focal lengths (that is, use different front lens groups or enter different imaging modes) to perform image shooting in different image shooting scenarios, to obtain a higher-quality image. The optical lens assembly has good scenario adaptability, and image shooting experience of a user is greatly improved.

In addition, the light guide module is movably disposed in the lens assembly, and can be driven by an image stabilization motor to move (for example, rotate or translate) to compensate for vibration, thereby implementing optical image stabilization. Because the light guide module can selectively reflect the light ray from the first lens group or the second lens group to the image sensor, the optical lens assembly can implement optical image stabilization through the light guide module regardless of whether the first lens group or the second lens group is used for imaging, in other words, regardless of whether the optical lens assembly works in the first imaging mode or the second imaging mode. This can improve image shooting quality of the optical lens assembly in different use scenarios. The optical lens assembly provided in this embodiment of this application can implement optical image stabilization while implementing optical zoom, and has good imaging quality and high imaging definition, thereby improving user experience.

In a possible implementation, a focal length of the first lens group is ELFG1, a focal length of the second lens group is ELFG2, the effective focal length of the optical lens assembly in the first imaging mode is ELF1, and the effective focal length of the optical lens assembly in the second imaging mode is ELF2, where ELFG1, ELFG2, ELF1, and ELF2 satisfy the following relationship: EFLG1/EFL1>0.5, EFLG2/EFL2>1.0, and EFL1<EFL2.

In this way, it can be ensured that, regardless of whether the first lens group is used for imaging or the second lens group is used for imaging, in other words, regardless of whether the optical lens assembly works in the first imaging mode or the second imaging mode, a quantity of light rays reflected by the light guide module to the image sensor in different image stabilization states (namely, at different positions) does not differ greatly. In other words, it can be ensured that imaging definition does not differ greatly in different image stabilization states, ensuring that the optical lens assembly always has good imaging quality.

In a possible implementation, the optical lens assembly further includes a rear lens group, located on an image side of the light guide module, and configured to: process a light ray from the light guide module and emit the processed light ray to the image sensor.

In this application, a rear lens group is additionally disposed on the object side of the light guide module, and the rear lens group may include one or more lenses, to improve imaging specifications of the optical lens assembly and improve imaging quality.

In a possible implementation, the rear lens group includes a third lens group and a fourth lens group that are sequentially arranged in a direction from an object side to an image side, and at least one of the third lens group and the fourth lens group is a focusing lens group that is movable along an optical axis.

The rear lens group of the optical lens assembly provided in this embodiment of this application includes the third lens group and the fourth lens group, and at least one lens group is a focusing lens group that can move forward and backward along the optical axis. In this way, the optical lens assembly further has an auto focus function, so that the optical lens assembly can implement both long-distance long-focus image shooting and a strong close-up (macro) image shooting capability to implement wide-object-distance imaging from a distant scene to a close-up scene, and has high imaging quality and high imaging definition.

In a possible implementation, one of the third lens group and the fourth lens group has a positive focal length, and the other has a negative focal length.

A positive focal length of the lens group causes positive impact on an aberration, and a negative focal length of a lens group causes negative impact on an aberration. In this application, the focal lengths of the third lens group and the fourth lens group are combined positively and negatively, so that aberrations caused by the two lens groups can be mutually offset. In other words, the optical lens assembly can obtain a smaller aberration, thereby improving imaging quality of the lens.

For example, the focal length of the third lens group is positive, and the focal length of the fourth lens group is negative; or the focal length of the third lens group is negative, and the focal length of the fourth lens group is positive.

In a possible implementation, the optical lens assembly further includes a second reflector located on an image side of the fourth lens group, and the second reflector is configured to reflect a light ray from the fourth lens group to the image sensor.

In this embodiment of this application, an additional reflector is disposed at a rear end of an optical path to deflect a propagation angle of light ray, so that a placement direction of the image sensor can be flexibly adjusted, to better utilize space. In this case, the light ray is deflected by 180 degrees in total, and a plane on which the image sensor is located may be parallel to a display of the electronic device. Therefore, disposition of the image sensor is no longer limited to a thickness size of the electronic device, and an image sensor of a larger size can be disposed. This helps improve imaging quality. For example, the second reflector may be a reflection mirror or a prism.

In a possible implementation, the second reflector includes a prism, the prism has an incident surface, a first reflective surface, and a second reflective surface, and the prism is configured such that the light ray from the fourth lens group is incident to the inside of the prism through the incident surface, and is emitted from the first reflective surface to the image sensor after being sequentially reflected by the first reflective surface and the second reflective surface.

In this way, the image sensor can be disposed obliquely relative to a thickness direction of the module. In this way, when the image sensor is configured to perform optical image stabilization, because the image sensor is disposed obliquely, an image stabilization motor that drives the image sensor to compensate for vibration may also be disposed obliquely. Therefore, space of the module in the thickness direction can be saved, and no additional or excessive thickness space is occupied due to disposition of the image stabilization motor. In other words, a size of the camera module in the thickness direction can be reduced, which helps reduce a volume of the camera module, and further facilitates a light and thin design of the electronic device.

In a possible implementation, the focal length of the first lens group is different from that of the second lens group.

In this way, when the optical lens assembly separately performs imaging through the first lens group and the second lens group, different effective focal lengths are more easily obtained, in other words, difficulty in an optical path design can be reduced.

In a possible implementation, the light guide module includes a movable reflector that is movable between a first position and a second position. When located at the first position, the movable reflector is configured to reflect the first light ray to the image sensor. When located at the second position, the movable reflector is configured to reflect the second light ray to the image sensor. The movable reflector is further configured to compensate for vibration to implement optical image stabilization.

In a possible implementation, the light guide module further includes a first reflector, located between the second lens group and the movable reflector, and configured to reflect the second light ray to the movable reflector.

In a possible implementation, the light guide module includes a first reflector and a movable reflector, where the first reflector is configured to reflect the second light ray to the image sensor. The movable reflector is movable between a first position and a second position. When located at the first position, the movable reflector reflects the first light ray to the image sensor and shields the second light ray. When located at the second position, the movable reflector avoids the second light ray. The first reflector and the movable reflector are further configured to compensate for vibration to implement optical image stabilization.

In a possible implementation, the light guide module includes a first reflector and a controllable transflective mirror, where the first reflector is configured to reflect the second light ray to the image sensor. The controllable transflective mirror is located between the first reflector and the image sensor, and the controllable transflective mirror has a transmissive mode and a reflective mode. In the reflective mode, the controllable transflective mirror reflects the first light ray to the image sensor and shields the second light ray. In the transmissive mode, the second light ray is emitted to the image sensor through the controllable transflective mirror. The first reflector and the controllable transflective mirror are further configured to compensate for vibration to implement optical image stabilization.

In a possible implementation, an equivalent focal length of the optical lens assembly in the first imaging mode is F1, an equivalent focal length of the optical lens assembly in the second imaging mode is F2, and F1 and F2 satisfy the following relationship: 1<F2/F1<10.

In this way, the optical lens assembly can have a large zoom ratio, and image shooting performance of the optical lens assembly can be improved, so that image shooting requirements of the user at different image shooting distances are met, and user experience is further ensured. For example, a ratio of F2 to F1 may be 2, 3, 4, 5, 6, 7, or the like.

In a possible implementation, the optical lens assembly further includes a light shielding member, and the light shielding member is configured to: when the movable reflector is moved to the second position, shield the first light ray, to prevent the first light ray from entering the movable reflector; and/or when the movable reflector is moved to the first position, shield the second light ray, to prevent the second light ray from entering the movable reflector.

In this way, when the optical lens assembly performs imaging by using the first light ray (that is, working in the first imaging mode), the second light ray is not introduced, so that interference from the second light ray to imaging can be effectively avoided. When the optical lens assembly performs imaging by using the second light ray (that is, working in the second imaging mode), the first light ray is not introduced, so that interference from the first light ray to imaging can be effectively avoided. This can avoid interference between different light rays, and avoid a problem that ghost images are formed on the image sensor because light rays from different front lens groups simultaneously enter the image sensor. In other words, stray light is not introduced, and imaging quality can be improved.

In a possible implementation, the light shielding member includes a position-changeable light shielding plate. When the movable reflector is moved to the second position, the light shielding plate is moved to a third position to shield the first light ray. When the movable reflector is moved to the first position, the light shielding plate is moved to a fourth position to shield the second light ray.

In this embodiment of this application, the position-changeable light shielding plate is disposed to shield the first light ray or the second light ray, so that an optical path can be accurately controlled, and a good shielding effect can be ensured. In addition, a simple and easy-to-implement implementation method helps save lens assembly space and implementation costs. In addition, high running stability helps improve reliability of using the optical lens assembly.

In a possible implementation, the movable reflector and the light shielding plate are synchronously driven by a same driving member.

In this way, the same driving member may be reused to switch positions of the light shielding plate and the movable reflector. In other words, no additional driving component needs to be disposed to drive the light shielding plate, which helps save lens assembly space and implementation costs. In addition, the same driving member is used to implement synchronous driving, which helps quickly respond to a switching operation of the user, shorten time required for switching, and avoid affecting user experience due to inconsistent position switching steps.

In a possible implementation, the light shielding plate is secured to the movable reflector, and the light shielding plate has a light leakage region. When the movable reflector is moved to the second position, the second light ray is emitted into the movable reflector through the light leakage region, and a non-light leakage region of the light shielding plate shields the first light ray.

In this embodiment of this application, the light shielding plate is secured to the movable reflector. In this way, the two components can be synchronously driven by a same driving member, thereby saving lens assembly space and implementation costs, helping quickly respond to a switching operation of the user, and shortening time required for switching. A light leakage region opposite to the movable reflector is disposed on the light shielding plate. In this way, optical path gating can be implemented by changing a position of the light leakage region. In addition, due to existence of the light leakage region, the light shielding plate can be disposed between the front lens group and the movable reflector, and the light shielding plate can span from one side of the movable reflector to the other side of the movable reflector, so that the light shielding plate can be secured to the movable reflector, and a connection structure between the light shielding plate and the movable reflector is simplified. For example, in this case, the light shielding plate may be secured to a mounting base of the movable reflector, so that the light shielding plate is secured to the movable reflector.

In a possible implementation, the light shielding member includes a mode-changeable light shielding plate. When the movable reflector is moved to the second position, a second region of the light shielding plate corresponding to the second lens group switches to a light transmission mode, and the second light ray is emitted to the movable reflector through the second region. A first region of the light shielding plate corresponding to the first lens group switches to a light shielding mode to shield the first light ray. When the movable reflector is moved to the first position, the first region of the light shielding plate corresponding to the first lens group switches to the light transmission mode, and the first light ray is emitted to the movable reflector through the first region. The second region of the light shielding plate corresponding to the second lens group switches to the light shielding mode to shield the second light ray.

In this embodiment of this application, in this way, light shielding effects in different regions can be achieved by changing light transmission attributes of the different regions. In this case, the light shielding plate is static and does not need to be moved. Therefore, no driving design is required, which helps simplify an internal structure of the module.

According to a second aspect, a camera module is provided, including an image sensor and the optical lens assembly provided in any one of the possible implementations of the first aspect, where the optical lens assembly is configured to project a light ray onto the image sensor.

According to a third aspect, a camera module is provided, including: a rear lens group, a prism, and an image sensor, where the rear lens group has a third optical axis; the prism has an incident surface, a first reflective surface, and a second reflective surface, and the prism is configured such that a light ray from the rear lens group is incident to the inside of the prism through the incident surface, and is emitted from the first reflective surface to the image sensor after being sequentially reflected by the first reflective surface and the second reflective surface. A photosensitive surface of the image sensor faces the first reflective surface, the photosensitive surface is disposed obliquely relative to the third optical axis, and the image sensor is further configured to compensate for vibration to implement optical image stabilization.

According to the camera module provided in this embodiment of this application, after the light ray from the rear lens group is incident to the inside of the prism, the light ray can be reflected by the first reflective surface and then by the second reflective surface in sequence, and then is emitted from the first reflective surface to the image sensor. The photosensitive surface of the image sensor faces the first reflective surface, and the photosensitive surface is disposed obliquely relative to the third optical axis. The image sensor is usually of a sheet-like structure, and the photosensitive surface is disposed obliquely relative to the third optical axis. In other words, the image sensor is disposed obliquely relative to the third optical axis. The image sensor in this embodiment of this application is further configured to compensate for vibration to implement optical image stabilization. Because the image sensor is disposed obliquely, the image stabilization motor that drives the image sensor to compensate for vibration may also be disposed obliquely. Therefore, space of the module in a thickness direction perpendicular to the third optical axis can be saved, and no additional or excessive thickness space is occupied due to disposition of the image stabilization motor. In other words, a size of the camera module in the thickness direction can be reduced, which helps reduce a volume of the camera module, and further facilitates a light and thin design of the electronic device.

In a possible implementation, an included angle between the photosensitive surface and the third optical axis is θ, and 15°≤θ<45°. For example, a value of θ may be 20°, 25°, 27.5°, 30°, 35°, or 40°.

In this way, the image sensor can be disposed obliquely as much as possible, and thickness space can be saved as much as possible. In addition, angle requirements in an optical design can be considered. For example, it is convenient for the light ray to undergo total internal reflection (total internal reflection, TIR) on the first reflective surface, and it is convenient for the light ray to be emitted from the first reflective surface at a vertical angle and to be incident to the photosensitive surface at a vertical angle. In other words, the foregoing angle selection can further reduce difficulty in the optical design, and help improve imaging quality.

In a possible implementation, the second reflective surface and the third optical axis are parallel to each other, an included angle between the first reflective surface and the incident surface is α, and an included angle between the first reflective surface and the second reflective surface is β, where 0°≤|α-2β|≤10°, for example, 0°≤|α-2β|≤5°.

Because the second reflective surface and the third optical axis are parallel to each other, values of α and 2β should be as close as possible. A smaller absolute value of α and 2β indicates that a light ray can be emitted from the first reflective surface at an angle closer to a vertical angle. For example, when α=2β, the light ray may be emitted to the image sensor at a 90-degree angle perpendicular to the first reflective surface. In this way, it can be ensured that the light ray is emitted from the first reflective surface at a vertical angle or nearly vertical angle. In addition, in this case, only the photosensitive surface needs to be parallel to the first reflective surface, so as to ensure that the emitted light ray is emitted into the photosensitive surface at a vertical angle or nearly vertical angle. This helps reduce optical design difficulty.

In a possible implementation, α=55°, β=27.5°, or α=60°, β=30°.

In a possible implementation, the camera module further includes a first lens group, a second lens group, and a light guide module, the camera module includes a first imaging mode and a second imaging mode, and the first lens group and the second lens group are disposed on an object side of the light guide module. When the camera module is in the first imaging mode, the light guide module is configured to reflect a first light ray from the first lens group to the rear lens group. When the camera module is in the second imaging mode, the light guide module is configured to reflect a second light ray from the second lens group to the rear lens group. The camera module has an effective focal length in the first imaging mode different from that in the second imaging mode.

In a possible implementation, the camera module further includes a third reflector, located on an object side of the rear lens group, and configured to reflect a light ray to the rear lens group. In other words, the camera module may alternatively be a conventional periscope camera module.

In a possible implementation, the rear lens group includes a third lens group and a fourth lens group that are sequentially arranged along the third optical axis, and at least one of the third lens group and the fourth lens group is a focusing lens group that is movable along the third optical axis.

In a possible implementation, one of the third lens group and the fourth lens group has a positive focal length, and the other has a negative focal length.

In a possible implementation, the rear lens group may alternatively include three, four, five, or more lens groups that are sequentially arranged along the third optical axis, where at least one lens group is a focusing lens group, and the remaining lens groups are fixed lens groups. For example, the rear lens group may also include a sixth lens group, a third lens group, and a fourth lens group that are sequentially arranged along the third optical axis. The sixth lens group and the fourth lens group are fixed lens groups, and the third lens group located in the middle is a movable focusing lens group.

According to a fourth aspect, an electronic device is provided, where the electronic device includes the camera module provided in any one of the possible implementations of the second aspect or the third aspect.

### BRIEF DESCRIPTION OF DRAWINGS

FIG. 1 is a diagram of a structure of an electronic device according to an embodiment of this application;
FIG. 2 is a diagram of a structure of a camera module according to an embodiment of this application;
FIG. 3 is a control principle diagram of optical image stabilization performed by an electronic device according to an embodiment of this application;
FIG. 4 is a diagram of another structure of a camera module according to an embodiment of this application;
FIG. 5 is a diagram of still another structure of a camera module according to an embodiment of this application;
FIG. 6 is a diagram of still another structure of a camera module in a first imaging mode according to an embodiment of this application;
FIG. 7 is a diagram of a structure of the camera module shown in FIG. 6 in a second imaging mode;
FIG. 8 is a diagram of still another structure of a camera module in a first imaging mode according to an embodiment of this application;
FIG. 9 is a diagram of a structure of the camera module shown in FIG. 8 in a second imaging mode;
FIG. 10 is a diagram of a structure of a prism according to an embodiment of this application;
FIG. 11 is a diagram of still another structure of a camera module according to an embodiment of this application;
FIG. 12 is a diagram of still another structure of a camera module in a first imaging mode according to an embodiment of this application;
FIG. 13 is a diagram of a structure of the camera module shown in FIG. 12 in a second imaging mode;
FIG. 14 is a diagram of still another structure of a camera module in a first imaging mode according to an embodiment of this application;
FIG. 15 is a diagram of a structure of the camera module shown in FIG. 14 in a second imaging mode;
FIG. 16 is a diagram of a structure of the camera module shown in FIG. 14 in a second imaging mode in another example;
FIG. 17 is a diagram of still another structure of a camera module in a first imaging mode according to an embodiment of this application;
FIG. 18 is a diagram of a structure of the camera module shown in FIG. 17 in a second imaging mode;
FIG. 19A and FIG. 19B are diagrams of still another structure of a camera module according to an embodiment of this application;
FIG. 20A and FIG. 20B are diagrams of still another structure of a camera module according to an embodiment of this application;
FIG. 21 is a diagram of a structure of a light shielding plate according to an embodiment of this application;
FIG. 22A and FIG. 22B are diagrams of still another structure of a camera module according to an embodiment of this application;
FIG. 23 is a diagram of another structure of a light shielding plate according to an embodiment of this application; and
FIG. 24A and FIG. 24B are diagrams of still another structure of a camera module according to an embodiment of this application.

### Reference numerals:

10: first lens group; 20: second lens group; 30: third lens group; 40: fourth lens group; 50: light guide module; 51: first reflector; 52: movable reflector; 53: controllable transflective mirror; 60: second reflector; 61: prism; 611: first reflective surface; 612: second reflective surface; 613: incident surface; 63: third reflector; 70: fifth lens group; 80: light shielding plate; 81: light transmission hole; 90: driving member; 91: mounting base;
100: camera module; 110: optical lens assembly; 111: first lens; 112: second lens; 113: third lens; 114: fourth lens; 115: fifth lens; 116: sixth lens; 117: seventh lens; 118: eighth lens; 120: image sensor; 121: aperture stop; 122: photosensitive surface; 130: filter; 140: first transmissive lens element; 150: second transmissive lens element; 160: image stabilization motor; 161: driving unit;
200: rear cover; 300: display; 400: middle frame; 500: pose sensor; 600: processing unit; 1000: electronic device;
OA1: first optical axis; OA2: second optical axis; and OA3: third optical axis.

### DESCRIPTION OF EMBODIMENTS

The following describes implementations of this application in detail. Examples of the implementations are shown in the accompanying drawings. Same or similar reference signs always indicate same or similar elements or elements having same or similar functions. The implementations described below with reference to the accompanying drawings are examples, and are merely used to explain this application, but cannot be understood as a limitation on this application.

In the descriptions of this application, it should be noted that, unless otherwise specified and limited, terms "mounting" and "connection/coupling" should be understood in a broad sense. For example, a connection may be fixed connection, a detachable connection, or an integrated connection. Alternatively, a connection may be a mechanical connection or an electrical connection, or may mean mutual communication. Alternatively, a connection may be a direct connection, or an indirect connection through an intermediate medium, or may be a connection between two elements or an interaction relationship between two elements. A person of ordinary skill in the art may understand specific meanings of the foregoing terms based on specific situations.

In the descriptions of this application, it should be understood that an orientation or a position relationship indicated by terms such as "up", "down", "side", "front", and "rear" is an orientation or a position relationship based on mounting, and is merely intended to describe this application and simplify the description, but is not intended to indicate or imply that a described apparatus or element needs to have a specific orientation or needs to be constructed and operated in a specific orientation. Therefore, such terms shall not be understood as a limitation on this application.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

For ease of understanding, the following first explains and describes technical terms in this application.

Lens assembly: The lens assembly is a component that uses a lens refraction principle to enable a light ray from a scene to pass through the lens assembly to form a clear image on a focusing plane.

Optical axis (optical axis, OA): The optical axis is a direction in which a light ray is transmitted through an optical system. Refer to a chief light ray of a center field of view. For a symmetric transmission system, the optical axis usually coincides with a rotation center line of the optical system. For off-axis and reflective systems, the optical axis is also presented as a broken line.

Object side and image side: With a lens as a boundary, a side on which a photographed object is located is an object side, and a surface on the lens close to the object side may be referred to as an object-side surface. With the lens as a boundary, a side on which an image of the photographed object is located is an image side, and the surface on the lens close to the image side may be referred to as an image-side surface.

Focal length (focal length): The focal length, also known as a focal distance, is a measure of how strongly an optical system converges or diverges light, and is a distance from an optical center of a lens or a lens group to a focal point when an infinitely distant scene forms a clear image through the lens or the lens group on a focal plane, or may be understood as a vertical distance from an optical center of the lens or the lens group to the focal plane. From a practical perspective, the focal length may be understood as a distance from a center of a lens assembly to an imaging plane.

Effective focal length (effective focal length, EFL): a distance from a main plane of an optical system to a corresponding focus point.

Equivalent focal length: An imaging angle of view on photosensitive elements of different sizes is converted into a focal length of an optical lens assembly element corresponding to the same imaging angle of view formed on a 135-specification camera module. The converted focal length is the 135 equivalent focal length, namely, the equivalent focal length. In other words, the 135-specification camera module is used as a standard, and a focal length of a non-135 specification camera module is converted into a focal length of the camera module of a 135 specification. Equivalent focal length=Effective focal length of the optical lens assembly*Focal length coefficient (or focal length multiple), where the focal length coefficient is a ratio of a diagonal length of a sensing element of a non-135 specification camera module to a diagonal length of a photosensitive element of a 135-specification camera module. Therefore, equivalent focal length=effective focal length of the optical lens assembly*diagonal length of a photosensitive element of a 135-specification camera module/a maximum image height. For example, if the effective focal length of the optical lens assembly is 14.8 mm, the maximum image height is 7.0 mm, and the diagonal length of the photosensitive element of the 135-specification camera module is 43.27 mm. In this case, the equivalent focal length of the optical lens assembly is 14.8*43.27/7.0≈91.5 mm.

Focus (focus): Focus is also referred to as light focusing or convergence. Focus is a process of changing positions of an object distance and an image distance by using a camera focusing mechanism, so that a photographed object is clearly imaged. Generally, a digital camera has a plurality of focusing modes: an auto focusing mode, a manual focusing mode, a multi-focus mode, or the like.

Auto focus (auto focus, AF): The auto focus is imaging and receiving reflected light, based on a light reflection principle of a photographed object, on an image sensor after the light passes through a lens assembly; then, obtaining an object distance of the photographed object through computer processing; and subsequently, moving the lens assembly automatically based on the object distance to complete focus adjustment. The auto focus is to make images of objects at different distances clear on an image sensor. A camera module usually controls, through a power structure like a voice coil motor (voice coil motor, VCM), an optical lens assembly to move forward and backward along an optical axis, to adjust a distance between the lens and an image sensor, so as to implement auto focus.

A focal power (focal power) is equal to a difference between convergence of an image-side light beam and convergence of an object-side light beam, and represents a capability of an optical system to refract light. The focal power is usually represented by letter φ. A refraction spherical focal power is φ=(n'-n)/r=n'/f'=-n/f, where n' is an image-side refractive index, n is an object-side refractive index, r is a spherical radius, f' is an image focal length, and f is an object focal length. Usually, the focal power is expressed as a reciprocal of an image-side focal length (approximately, a refractive index of air is 1). The above focal power equation is universal for any optical system (without paraxial or non-paraxial distinction).

The focal power represents a refraction capability of an optical system to incident parallel light beams. A larger value of φ indicates that a parallel beam is refracted more greatly. When φ>0, refraction is convergent. When φ<0, refraction is divergent. When φ=0, it indicates planar refraction. In this case, a parallel light beam along an axis is still a parallel light beam along an axis after refraction, and no refraction occurs.

Refractive index: If a light ray enters a non-absorbent homogeneous material, light reflection and refraction occur at a boundary of the material. The refractive index n is equal to a ratio of a speed c of light in vacuum to a speed v of light in a medium. In practice, the refractive index is measured by measuring a refraction angle caused by refraction of a light beam at a boundary. A formula for describing the refraction angle is referred to as the Snell's (Snell's) law.

Field of view (field of view, FOV): also referred to as a viewing field. In an optical instrument, with a lens assembly of the optical instrument as a vertex, an included angle formed by two edges of a maximum range that is of an object image of a photographed object and that can pass through the lens assembly is referred to as a field of view.

Aperture stop (aperture stop, STO): is a diaphragm (diaphragm) that limits a maximum inclination angle of a marginal light ray in an imaging beam of an on-axis point, namely, a diaphragm with a minimum incident aperture angle. Herein, the diaphragm refers to an edge, a frame, or a specially disposed barrier with a hole of an optical element in an optical component that is used to limit a size of an imaging beam or an imaging space unit.

Dispersion (dispersion): A property that a refractive index of a material varies with a frequency of incident light is referred to as "dispersion". For example, when sunlight passes through a prism, a continuous color spectrum arranged in order from red to purple is formed. In a broad sense, dispersion not only refers to decomposition of optical waves into a spectrum, but also refers to any physical quantity that varies with frequency (or wavelength). In embodiments of this application, after polychromatic light enters a lens, because the lens has different refractive indexes for light of various frequencies, and propagation directions of various colored light are deflected to different degrees, the polychromatic light is dispersed separately when leaving the lens. This is referred to as "dispersion".

An Abbe number (Abbe number), in other words, a dispersion coefficient, is a difference ratio of refractive indices of an optical material at different wavelengths, and represents a degree of dispersion of the material. The Abbe number is an important indicator for measuring imaging quality of a lens. A larger Abbe number (dispersion coefficient) indicates less obvious dispersion and better imaging quality of the lens. A smaller Abbe number (dispersion coefficient) indicates more obvious dispersion and poorer imaging quality of the lens.

Aberration (aberration): A paraxial region of an optical system has a property of an ideal optical system. A paraxial light ray emitted from a point on an object intersects with an image plane at one point (namely, a paraxial image point). However, light rays actually passing through different apertures of a lens assembly can hardly perfectly intersect at one point. Instead, there are deviations from the position of the paraxial image point. These deviations are collectively referred to as aberrations.

Maximum image height (image height, ImgH) is a maximum image height of an image formed by a lens assembly.

An embodiment of this application first provides an electronic device. The electronic device may be, for example, an electronic product having a photographing or video shooting function, for example, a mobile phone, a tablet computer, a notebook computer, a television, an in-vehicle device, a wearable device, a personal digital assistant (personal digital assistant, PDA), a point of sales (point of sales, POS), a video camera, a camera, or a video surveillance device. The mobile phone may be, for example, a conventional bar-type mobile phone, or may be a foldable mobile phone, for example, may be a vertical foldable mobile phone, a left-right inward-foldable mobile phone, or a left-right outward-foldable mobile phone. The wearable device may be, for example, a smart band, a smart watch, wireless earphones, augmented reality (augmented reality, AR) glasses, an AR helmet, virtual reality (virtual reality, VR) glasses, or a VR helmet. In embodiments of this application, descriptions are provided by using an example in which the electronic device is a mobile phone.

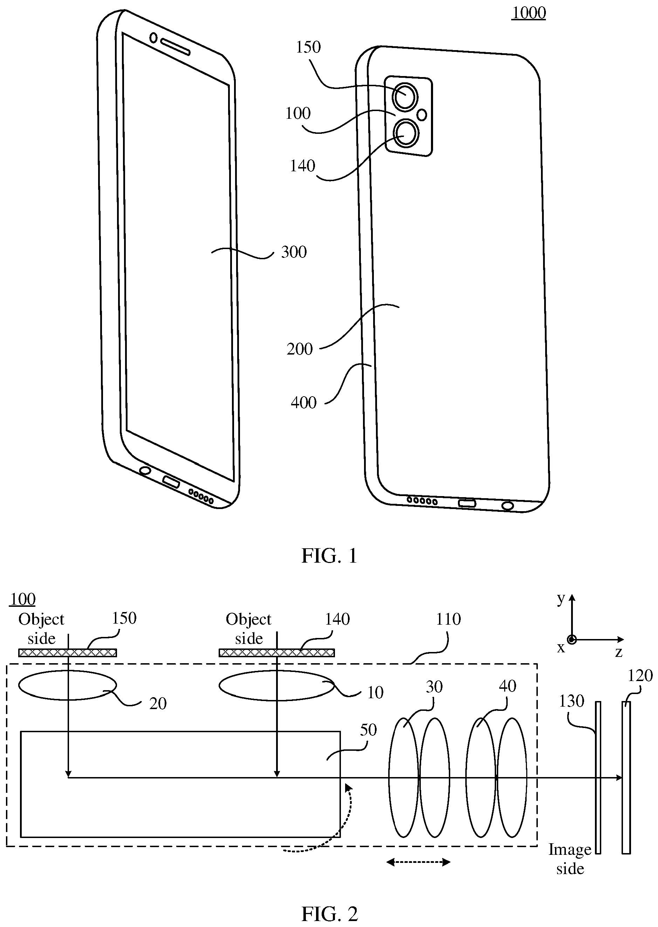

FIG. 1 is a diagram of a structure of an electronic device 1000 according to an embodiment of this application. As shown in FIG. 1, the electronic device 1000 includes a camera module 100, a rear cover 200, a display 300, a side frame 400, and an image processor (not shown in the figure) located inside the device. The rear cover 200 and the display 300 are secured to two sides of the side frame 400 opposite to each other, and the rear cover 200, the display 300, and the side frame 400 jointly enclose an internal cavity of the electronic device 1000.

The display 300 may be configured to display an image, and may further integrate a touch function to implement human-computer interaction. The camera module 100 is accommodated in the internal cavity of the device, and the camera module 100 is configured to: collect optical information outside the electronic device 1000, and generate a corresponding image signal. The image processor and the camera module 100 are in a communication connection, and the image processor is configured to: obtain an image signal from the camera module 100 and process the image signal. The communication connection between the camera module 100 and the image processor may be for data transmission implemented through an electrical connection like routing, or data transmission implemented through coupling. It may be understood that the communication connection between the camera module 100 and the image processor may alternatively be implemented in another manner in which data transmission can be implemented.

In some examples, the rear cover 200 may be provided with a camera opening, the camera module 100 collects light rays through the camera opening, and the camera module 100 may be used as a rear-facing camera of the electronic device 1000. For example, the rear cover 200 includes a transmissive lens element, and the transmissive lens element is mounted on the camera opening, to allow light rays to pass through, and can be dustproof and waterproof. In some cases, the transmissive lens element may also be considered as a portion of the camera module 100. The transmissive lens element may be, for example, a first transmissive lens element 140 and a second transmissive lens element 150 in FIG. 1.

In some examples, the camera module 100 may also be used as a front-facing camera of the electronic device 1000. For example, the display 300 may be provided with a transmissive region, and the camera module 100 may collect optical information outside the electronic device 1000 through the transmissive region. In other words, the camera module 100 may be used as a front-facing camera module of the electronic device 1000, or may be used as a rear-facing camera module of the electronic device 1000. This is not strictly limited in embodiments of this application.

In actual application, the electronic device 1000 may have one camera module, that is, include only the camera module 100, or may have two, three, four, five, or more camera modules including the camera module 100. When there are a plurality of camera modules, the plurality of camera modules may be arranged on a side surface of the electronic device 1000 in a specific manner. For example, one or more of the camera modules are disposed on a front side surface on which the display 300 is located, and are used as front-facing cameras, and the remaining one or more camera modules are disposed on the rear cover 200, and are used as rear-facing cameras.

In some examples, the electronic device 1000 may include one or more of a front-facing camera (module), a rear-facing camera, a primary camera lens assembly, a secondary camera lens assembly, a long-focus lens assembly, an ultra-wide-angle lens assembly, a macro lens assembly, a depth of field lens assembly, or the like. The camera module 100 may be any one of the foregoing lens assemblies.

In some examples, the camera module 100 may be electrically connected to a mainboard in the internal cavity of the device. In an implementation, the camera module 100 may be electrically connected to the mainboard through an electrical connector. For example, the camera module 100 is provided with a male connector of the electrical connector, and the mainboard is provided with a female connector of the electrical connector. The female connector is inserted into the male connector, to electrically connect the camera module 100 to the mainboard. A processor is disposed on the mainboard, and the processor controls the camera module 100 to shoot an image. When a user enters an image shooting instruction, the processor receives the image shooting instruction, and controls, based on the image shooting instruction, the camera module 100 to shoot a to-be-photographed object.

In some embodiments, the electronic device 1000 may further include an analog-to-digital converter (also referred to as an A/D converter, not shown in the figure). The analog-to-digital converter is connected between the camera module 100 and the image processor. The analog-to-digital converter is configured to: convert an analog image signal generated by the camera module 100 into a digital image signal and transmit the digital image signal to the image processor. Then, the image processor processes the digital image signal, to obtain a processed image signal. The processed image signal may be displayed as an image or a video on the display.

Optionally, the electronic device 1000 may further include a memory (not shown in the figure). The memory and the image processor are in a communication connection, and the image processor transmits a processed image signal to the memory, so that when an image needs to be viewed subsequently, the processed image signal can be found in the memory at any time and displayed on the display. In some embodiments, the image processor further compresses a processed image signal, and then stores the compressed image signal in the memory, to save space in the memory.

FIG. 2 is a diagram of a structure of the camera module 100 according to an embodiment of this application. As shown in FIG. 2, the camera module 100 in this embodiment of this application includes an optical lens assembly 110 and an image sensor 120.

The image sensor 120 is located on an image side of the optical lens assembly 110. The camera module 100 may further include a circuit board (not shown in the figure), and the image sensor 120 may be disposed on the circuit board. A light ray can pass through the optical lens assembly 110 to reach the image sensor 120. For example, an operating principle of the camera module 100 is as follows: light rays reflected from a shot scene pass through the optical lens assembly 110 to generate an optical image, and the optical image is projected onto the image sensor 120. The image sensor 120 converts the optical image into an electrical signal, namely, an analog image signal, and transmits the electrical signal to the analog-to-digital converter; and the analog-to-digital converter converts the electrical signal into a digital image signal, and transmits the digital image signal to an image processor.

The image sensor 120 (also referred to as a photosensitive element) is a semiconductor chip, and includes hundreds of thousands to millions of photodiodes on a surface, and electric charges are generated when the photodiodes are irradiated by light rays. The image sensor 120 may be a charge coupled device (charge coupled device, CCD), or may be a complementary metal-oxide-semiconductor (complementary metal-oxide-semiconductor, CMOS). The charge coupled device is made of a highly photosensitive semiconductor material, and can convert light rays into electric charges. The charge coupled device includes many photosensitive units, usually in megapixels. When the surface (namely, the photosensitive surface) of the charge coupled device is illuminated by light rays, each photosensitive unit generates electric charges on a component. Signals generated by all photosensitive units are combined to form a complete picture. The complementary metal-oxide semiconductor is a semiconductor mainly made by using two elements: silicon and germanium, so that semiconductors of N and P poles coexist on the complementary metal-oxide semiconductor. A current generated by these two complementary effects can be recorded and interpreted into an image by a processing chip.

In some examples, the image sensor 120 may move in a plane perpendicular to a thickness direction of the camera module 100, or tilt relative to the thickness direction of the camera module 100, to implement image stabilization. In this case, the image sensor 120 does not have a motion capability in a direction parallel to the thickness direction of the camera module 100, or has a weak stroke that is far less than a focusing stroke, to reduce a thickness of the module. In some other embodiments, the image sensor 120 may alternatively be a fixed component and cannot compensate for vibration.

In some examples, as shown in FIG. 2, the camera module 100 further includes a filter 130. The filter 130 may be located between the optical lens assembly 110 and the image sensor 120, and is configured to filter out an unnecessary band in light rays, to prevent the image sensor 120 from generating false colors or ripples, so as to improve effective resolution and color reproduction of the image sensor 120. For example, the filter 130 may be an infrared filter, for example, an infrared radiation-cut filter (infrared radiation-cut filter, IRCF). The filter 130 in this embodiment is an independent component located between the optical lens assembly 110 and the image sensor 120. In another embodiment, the filter 130 may be disposed at any position before the image sensor 120, or a mechanical part, namely, the filter 130 may be removed, and instead, surface processing or material processing is performed on at least one optical element of the optical lens assembly 110, to implement light filtering. A specific embodiment of a mechanical part or structure configured to implement light filtering is not strictly limited in this application.

For example, the filter 130 may be implemented by performing vapor deposition on an infrared (infrared radiation, IR) material coating on a blue crystal substrate.

For example, the filter 130 may be a white glass filter, a blue glass filter, or the like.

Embodiments of this application mainly relate to a structural improvement of the optical lens assembly 110. The following describes structural details of the optical lens assembly 110 with reference to the accompanying drawings. As shown in FIG. 2, the optical lens assembly 110 includes a plurality of front lens groups and a light guide module 50.

The plurality of front lens groups including the first lens group 10 and the second lens group 20 are disposed in parallel on an object side of the light guide module 50. For example, there may be two, three, four, or more front lens groups. The front lens groups are configured to receive external ambient light, and the external ambient light may be emitted into the light guide module 50 through any front lens group. The plurality of front lens groups may be disposed in a one-to-one correspondence with a plurality of camera openings in the electronic device 1000. In other words, the plurality of front lens groups may be disposed in a one-to-one correspondence with a plurality of transmissive lens elements. External ambient light is emitted into a corresponding front lens group by passing through a transmissive lens element, and then is emitted into the light guide module 50 by passing through the front lens group.

For example, as shown in FIG. 2, the plurality of front lens groups include the first lens group 10 and the second lens group 20 that are disposed in parallel on the object side of the light guide module 50. The first lens group 10 is correspondingly disposed with the first transmissive lens element 140. External ambient light (denoted as a first light ray) is emitted into the first lens group 10 through the first transmissive lens element 140, and is emitted into the light guide module 50 after being converged by the first lens group 10. The second lens group 20 is correspondingly disposed with the second transmissive lens element 150. External ambient light (denoted as a second light ray) is emitted into the second lens group 20 through the second transmissive lens element 150, and is emitted into the light guide module 50 after being converged by the second lens group 20.

The light guide module 50 functions as a switching switch in an optical path. Optical paths in which the plurality of front lens groups are located may be considered as a plurality of upstream optical paths, and an optical path between the light guide module 50 and the image sensor 120 may be considered as a downstream optical path. The plurality of upstream optical paths are connected in parallel to the object side of the light guide module 50, and the downstream optical path is connected to an image side of the light guide module 50. The light guide module 50 is configured to enable one of the plurality of upstream optical paths to be connected to the downstream optical path, so that a light ray in the upstream optical path is transmitted to the downstream optical path. In other words, an operation is performed on the light guide module 50, so that any one of the plurality of upstream optical paths can be connected to the downstream optical path, and the remaining upstream optical paths can be disconnected from the downstream optical path. Or in other words, the light guide module 50 can transmit a light ray from any one of the front lens groups to the image sensor 120, and avoid transmission of light rays from the remaining front lens groups to the image sensor 120.

Under a switching effect of the light guide module 50, the optical lens assembly 110 may project light rays from different front lens groups to the image sensor 120. In other words, the optical lens assembly 110 may perform imaging through different front lens groups. In addition, the optical lens assembly 110 has different effective focal lengths when performing imaging through different front lens groups. In other words, when the image sensor 120 receives light rays from different front lens groups, the optical lens assembly 110 has different effective focal lengths. Therefore, the optical lens assembly 110 has an optical zoom capability.

For example, as shown in FIG. 2, two front lens groups: the first lens group 10 and the second lens group 20, are disposed on the object side of the light guide module 50. The light guide module 50 is configured to: transmit a first light ray from the first lens group 10 to the image sensor 120, and avoid transmission of a second light ray from the second lens group 20 to the image sensor 120. In this case, the optical lens assembly 110 performs imaging through the first lens group 10 (the first light ray), and the optical lens assembly 110 enters a first imaging mode. In this case, the effective focal length of the optical lens assembly 110 is EFL1. In addition, the light guide module 50 may further transmit the second light ray from the second lens group 20 to the image sensor 120, and avoid transmission of the first light ray from the first lens group 10 to the image sensor 120. In this case, the optical lens assembly 110 may perform imaging through the second lens group 20 (the second light ray), and the optical lens assembly 110 enters a second imaging mode. In this case, the effective focal length of the optical lens assembly 110 is EFL2. Because the effective focal length EFL1 is different from the effective focal length EFL2, the optical lens assembly 110 can work at different effective focal lengths, in other words, the optical lens assembly 110 can work in different imaging modes, so that the optical lens assembly 110 has an optical zoom capability.

In this embodiment of this application, the light guide module 50 is further configured to compensate for vibration to implement optical image stabilization. The light guide module 50 may be driven by an image stabilization motor (not shown in the figure) to rotate or move, to implement optical image stabilization and improve image shooting quality of the optical lens assembly 110.

Specifically, after a gyroscope disposed in the electronic device detects that the device jitters, the light guide module 50 may be moved in a reverse direction (for example, translated or rotated) through the image stabilization motor of the camera module 100, to compensate for vibration, that is, compensate for image blur caused by jitter during exposure. In this case, the light guide module 50 is moved by the image stabilization motor, so that it can be ensured that a light ray that should be emitted into a specific imaging point is not emitted to another position. This ensures image shooting quality and improves photographing experience of the user.

In some examples, that the light guide module 50 performs jitter compensation to implement optical image stabilization may be that the image stabilization motor drives the light guide module 50 to rotate around a y-axis in FIG. 2, that is, drives the light guide module 50 to perform a head shake motion, to implement yaw (yaw) axis image stabilization. In addition, the image stabilization motor may further drive the light guide module 50 to rotate around an x-axis perpendicular to the paper in FIG. 2, that is, drive the light guide module 50 to perform a nodding (head-up) motion, to implement pitch (pitch) axis image stabilization.

In some examples, the light guide module 50 includes one or more optical elements to implement optical path selection. The one or more optical elements may be, for example, one or more reflectors. The light guide module 50 performs jitter compensation to implement optical image stabilization. One of, a plurality of, or all of the optical elements (for example, reflectors) in the light guide module 50 may compensate for vibration to implement optical image stabilization. This is not limited in this application.

The optical lens assembly 110 provided in this embodiment of this application includes a plurality of front lens groups and the light guide module 50. The plurality of front lens groups are disposed in parallel on the object side of the light guide module 50. The light guide module 50 can reflect light rays from different front lens groups to the image sensor 120, so that the optical lens assembly 110 can perform imaging through different front lens groups, in other words, the optical lens assembly 110 can enter the first imaging mode or the second imaging mode. However, the optical lens assembly 110 has an effective focal length in the first imaging mode different from that in the second imaging mode. In other words, when the image sensor 120 receives light rays from different front lens groups, the optical lens assembly 110 has different effective focal lengths. Therefore, the optical lens assembly 110 has an optical zoom capability, and the optical lens assembly 110 can use different focal lengths (that is, use different front lens groups or enter different imaging modes) to perform image shooting in different shooting scenarios, to obtain a higher-quality image. The optical lens assembly 110 has good scenario adaptability, and image shooting experience of the user is greatly improved.

In addition, the light guide module 50 is movably disposed in the lens assembly, and can be driven by the image stabilization motor to move (for example, rotate or translate) to compensate for vibration, thereby implementing optical image stabilization. Because the light guide module 50 can selectively reflect a light ray from any front lens group to the image sensor 120, the optical lens assembly 110 can implement optical image stabilization through the light guide module 50 regardless of which front lens group is used for imaging, in other words, regardless of whether the optical lens assembly 110 works in the first imaging mode or the second imaging mode. This can improve image shooting quality of the optical lens assembly 110 in different use scenarios. The optical lens assembly 110 provided in this embodiment of this application can implement optical image stabilization while implementing optical zoom, and has good imaging quality and high imaging definition, thereby improving user experience.

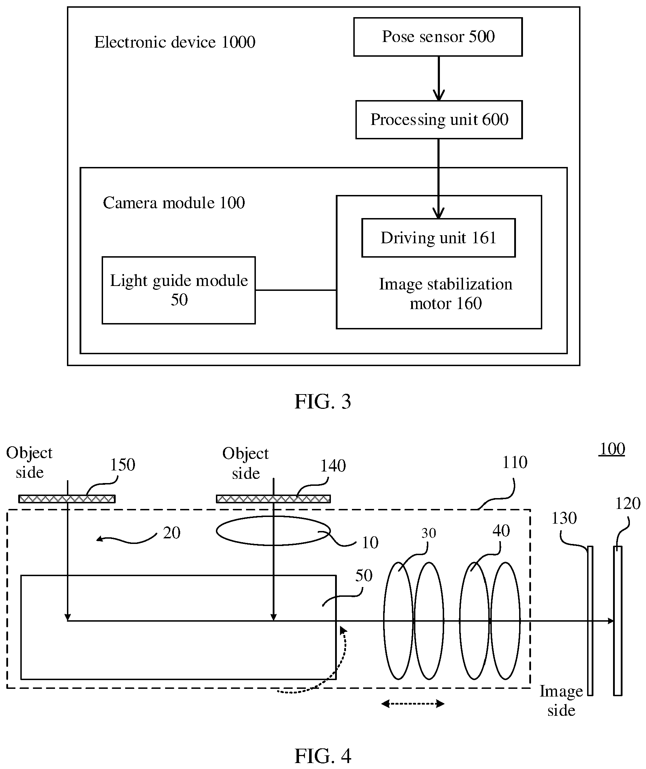

FIG. 3 is a control principle diagram of optical image stabilization performed by the electronic device 1000 according to an embodiment of this application. As shown in FIG. 3, the electronic device 1000 further includes a pose sensor 500 and a processing unit 600. The pose sensor 500 is configured to: collect jitter information of the electronic device 1000, and send the jitter information to the processing unit 600. The processing unit 600 is configured to control an image stabilization motor 160 of the camera module 100 based on the jitter information, so that the image stabilization motor 160 can drive the light guide module 50 to rotate or translate, to implement optical image stabilization.

Further, the processing unit 600 may control the image stabilization motor 160 through a driving unit 161 of the image stabilization motor 160. The processing unit 600 may be, for example, an image stabilization chip, or any processor or controller configured to perform image stabilization calculation. The driving unit 161 is, for example, a driving circuit or a driving chip. In this case, the processing unit 600 may calculate jitter compensation information (for example, a displacement amount or a rotation amount of reverse motion) of the light guide module 50 based on the jitter information, and send the jitter compensation information to the driving unit 161. The driving unit 161 controls the image stabilization motor 160 based on the jitter compensation information, for example, controls a magnitude and/or a direction of a driving current of the image stabilization motor 160, so that the image stabilization motor 160 drives the light guide module 50 to compensate for vibration.

In some examples, the pose sensor 500 includes but is not limited to a gyroscope, an accelerometer, an inertial sensor, a Hall (Hall) sensor, a magnetic encoder, or the like. For example, the pose sensor 500 may be a micro electro mechanical system (micro electro mechanical system, MEMS) gyroscope.

In some examples, the image stabilization motor 40 may be any one of a voice coil motor, a piezoelectric motor (piezoelectric motor), a shape memory alloy (shape memory alloy, SMA) motor, a MEMS motor, a suspension wire motor, a ball screw motor, and the like.

For example, the image stabilization motor 160 may be a voice coil motor. In this case, the image stabilization motor 160 may include three parts: a fixed part, a movable part, and an actuating part. The fixed part has accommodating space that is configured to accommodate the movable part. The movable part is movably disposed on the fixed part, and is configured to fasten and mount the light guide module 50. The actuating part is configured to drive the movable part to rotate, that is, drive the light guide module 50 to rotate, to compensate for vibration.

The actuating part usually includes a combination of a coil and a magnet. The coil and the magnet may be secured to the fixed part and the movable part respectively, and may be arranged facing each other in parallel. A driving force can be provided for the magnet by supplying a direct current to the coil. A magnitude and a direction of a force applied to the magnet covered by magnetic fields can be controlled by changing a magnitude and a direction of the direct current of the coil. The magnet may provide the driving force for the movable part, to drive the movable part to rotate, and the movable part further drives the light guide module 50 to rotate, to implement a jitter compensation function.

In some examples, to implement closed-loop control, the image stabilization motor 160 may further include a position detection sensor. The position detection sensor is configured to: detect real-time position information of the movable part, and send the real-time position information to the driving unit 161. The driving unit 161 controls the coil based on the real-time position information, for example, increases or decreases a magnitude of the current of the coil, and changes a direction of the current.

In some examples, the position detection sensor may be a Hall effect sensor or a magnetic resistance (magnetic resistance, MR) sensor.

As shown in FIG. 2, the optical lens assembly 110 provided in this embodiment of this application further includes a rear lens group, configured to: process the light ray (for example, the first light ray or the second light ray) from the light guide module 50, and emit the processed light ray to the image sensor 120.

In this application, a rear lens group is additionally disposed on the object side of the light guide module 50, and the rear lens group may include one or more lenses, to improve imaging specifications of the optical lens assembly 110 and improve imaging quality. For example, the rear lens group may include two to eight lenses, for example, two, four, five, or six lenses.

As shown in FIG. 2, the rear lens group includes a third lens group 30 and a fourth lens group 40 that are sequentially arranged in a direction from an object side to an image side. The light ray (for example, the first light ray or the second light ray) from the light guide module 50 is emitted to the image sensor 120 after passing through the third lens group 30 and the fourth lens group 40. In this embodiment of this application, at least one of the third lens group 30 and the fourth lens group 40 is a focusing lens group that can move forward and backward along an optical axis. For example, the third lens group 30 and/or the fourth lens group 40 may move forward and backward along the optical axis, so that the optical lens assembly 110 has an auto focus function, and the optical lens assembly 110 can implement both long-distance long-focus image shooting with high imaging quality and a strong close-up (macro) image shooting capability, to implement wide-object-distance imaging from a distant scene to a close-up scene.

The rear lens group of the optical lens assembly 110 provided in this embodiment of this application includes the third lens group 30 and the fourth lens group 40, and at least one lens group is a focusing lens group that can move forward and backward along the optical axis. In this way, the optical lens assembly 110 further has an auto focus function, so that the optical lens assembly 110 can implement both long-distance long-focus image shooting and a strong close-up (macro) image shooting capability to implement wide-object-distance imaging from a distant scene to a close-up scene, and has high imaging quality and high imaging definition.

In some examples, focal lengths of the plurality of front lens groups are different. For example, a focal length of the first lens group 10 is different from that of the second lens group 20. In this way, when the optical lens assembly 110 performs imaging through different front lens groups, different effective focal lengths are more easily obtained, in other words, difficulty in an optical path design can be reduced.

In some examples, focal lengths of a part or all of the plurality of front lens groups may be the same. In this case, the effective focal length of the optical lens assembly 110 may be changed by changing a distance between the front lens group and the rear lens group. In other words, for a plurality of lens groups with a same focal length, distances between the plurality of lens groups and the rear lens group may be different. In this way, the optical lens assembly 110 obtains different effective focal lengths when performing imaging through different front lens groups.

In some examples, the first lens group 10 and the second lens group 20 each include at least one imaging lens, and a quantity of lenses in the first lens group 10 and a quantity of lenses in the second lens group 20 may be the same or may be different. For example, the first lens group 10 and/or the second lens group 20 may include one, two, three, or more lenses. When the first lens group 10 and/or the second lens group 20 include/includes a plurality of lenses, the plurality of lenses may be sequentially spaced apart in parallel along the optical axis.

In some examples, the focal length of the first lens group 10 is different from that of the second lens group 20. Both focal lengths of the first lens group 10 and the second lens group 20 may be positive, or may be negative, or one focal length is positive and the other focal length is negative. The focal length of the first lens group 10 is greater than the focal length of the second lens group 20, or the focal length of the first lens group 10 may be less than the focal length of the second lens group 20.

FIG. 4 is a diagram of another structure of the camera module 100 according to an embodiment of this application. As shown in FIG. 4, in a special implementation, a focal length of one of the first lens group 10 and the second lens group 20 may be 0, and a focal length of the other lens group may be positive or negative. For example, the focal length of the first lens group 10 is positive, and the focal length of the second lens group 20 is 0. In this case, the second lens group 20 may not have any lens, in other words, no lens is disposed on an optical path on which the second lens group 20 is located. The second lens group 20 is equivalent to only one light entrance, and the second light ray may be directly emitted to the light guide module 50 through the optical path or entrance on which the second lens group 20 is located. Alternatively, the lens in the second lens group 20 may be a planar mirror whose focal power is 0.

In some examples, focal lengths of the first lens group 10 and the second lens group 20 are the same (not 0), but distances from the first lens group 10 and the second lens group 20 to a rear lens group are different. In this way, when the optical lens assembly 110 performs imaging through the first lens group 10 or the second lens group 20, the optical lens assembly 110 can also have different effective focal lengths.

In some examples, the light guide module 50 may include any optical element that can switch and select light rays from a plurality of front lens groups. For example, the light guide module 50 may include one or more reflectors, a controllable transflective mirror, or the like. The following further describes structural details of the light guide module 50 by using a plurality of embodiments.

In some examples, when the light guide module 50 reflects the first light ray to the rear lens group, the optical lens assembly 110 performs imaging through the first lens group 10 and the rear lens group. In this case, the optical lens assembly 110 enters the first imaging mode, and an equivalent focal length of the optical lens assembly 110 is denoted as F1. When the light guide module 50 reflects the second light ray to the rear lens group, the optical lens assembly 110 performs imaging through the second lens group 20 and the rear lens group. In this case, the optical lens assembly 110 enters the second imaging mode, and an equivalent focal length of the optical lens assembly 110 is denoted as F2. F1 and F2 satisfy the following relationship: 1<F2/F1<10.

In this way, the optical lens assembly 110 can have a large zoom ratio, and image shooting performance of the optical lens assembly 110 can be improved, so that image shooting requirements of the user at different image shooting distances are met, and user experience is further ensured. For example, a ratio of F2 to F1 may be 2, 3, 4, 5, 6, 7, or the like.

In some examples, the focal length of the first lens group 10 is ELFG1, and the focal length of the second lens group 20 is ELFG2. When the light guide module 50 reflects the first light ray to the image sensor 120, the optical lens assembly 110 performs imaging through the first lens group 10 and the rear lens group. In this case, the optical lens assembly 110 enters the first imaging mode, and the effective focal length of the optical lens assembly 110 is ELF1. When the light guide module 50 transmits the second light ray to the image sensor 120, the optical lens assembly 110 performs imaging through the second lens group 20 and the rear lens group. In this case, the optical lens assembly 110 enters the second imaging mode, and the effective focal length of the optical lens assembly 110 is ELF2. ELFG1, ELFG2, ELF1, and ELF2 satisfy the following relationship: EFLG1/EFL1>0.5, EFLG2/EFL2>1.0, and EFL1<EFL2.

In this way, it can be ensured that, regardless of whether the first lens group 10 or the second lens group 20 is used for imaging, in other words, regardless of whether the optical lens assembly 110 works in the first imaging mode or the second imaging mode, a quantity of light rays reflected by the light guide module 50 to the image sensor 120 in different image stabilization states (namely, at different positions) does not differ greatly. In other words, it can be ensured that imaging definition does not differ greatly in different image stabilization states, ensuring that the optical lens assembly 110 always has good imaging quality.

In some examples, the third lens group 30 and the fourth lens group 40 each include at least one imaging lens, and a quantity of lenses in the third lens group 30 and a quantity of lenses in the fourth lens group 40 may be the same or may be different. For example, the third lens group 30 and/or the fourth lens group 40 may include two, three, four, or more lenses. When the third lens group 30 and/or the fourth lens group 40 include/includes a plurality of lenses, the plurality of lenses may be sequentially spaced apart in parallel along an optical axis.

In some examples, the third lens group 30 is a focusing lens group that can move forward and backward along the optical axis, and the fourth lens group 40 is a fixed lens group. Alternatively, the third lens group 30 is a fixed lens group, and the fourth lens group 40 is a focusing lens group that can move forward and backward along the optical axis. Alternatively, both the third lens group 30 and the fourth lens group 40 are focusing lens groups that can move forward and backward along the optical axis.

In some examples, the third lens group 30 is moved along the optical axis to implement focusing and macro image shooting effects, and a magnification ratio Mag in a macro state (that is, at a shortest focusing distance, for example, 60 mm to 100 mm) satisfies: 0.2<Mag<0.5.

In some examples, one of the third lens group 30 and the fourth lens group 40 has a positive focal length, and the other has a negative focal length. For example, the focal length of the third lens group 30 is positive (for example, 13 mm), and the focal length of the fourth lens group 40 is negative (for example, -11 mm). Alternatively, the focal length of the third lens group 30 is negative, and the focal length of the fourth lens group 40 is positive. A positive focal length of the lens group causes positive impact on an aberration, and a negative focal length of a lens group causes negative impact on an aberration. In this application, the focal lengths of the third lens group 30 and the fourth lens group 40 are combined positively and negatively, so that aberrations caused by the two lens groups can be mutually offset. In other words, the optical lens assembly 110 can obtain a smaller aberration, thereby improving imaging quality of the lens.

In some examples, as shown in FIG. 2, a plurality of front lens groups are arranged in a straight line as a whole, and are disposed on a same side of the light guide module 50. For example, the plurality of front lens groups may be disposed in a one-to-one correspondence with a plurality of camera openings or a plurality of transmissive lens elements disposed on the rear cover 200 of the electronic device 1000. The light guide module 50 may reflect a light ray from any front lens group to the rear lens group. In other words, in this case, the front lens group and the rear lens group as a whole form a periscope structure layout, so that a disposition position and an angle of the optical lens assembly 110 are more flexible.

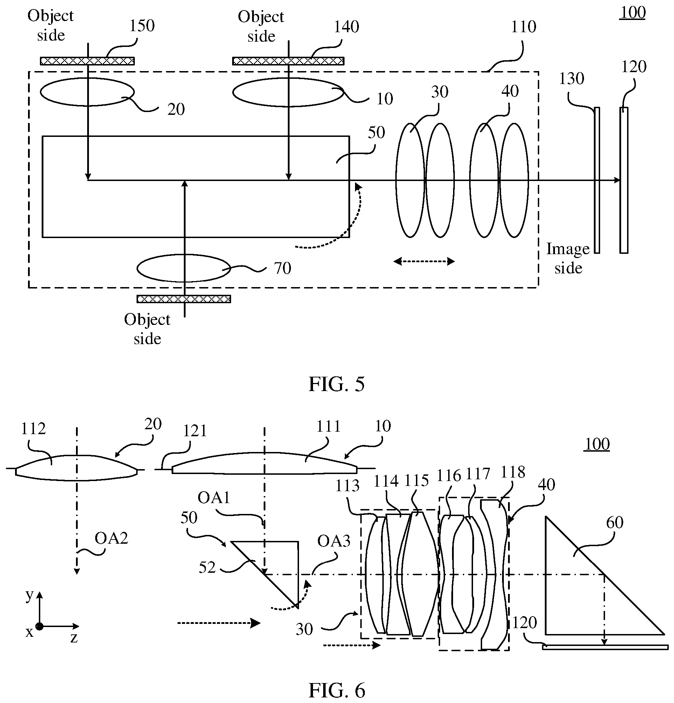

FIG. 5 is a diagram of still another structure of the camera module 100 according to an embodiment of this application. In some examples, as shown in FIG. 5, a plurality of front lens groups may be disposed on two opposite side parts of the light guide module 50. For example, the first lens group 10 and the second lens group 20 are disposed on one side of the light guide module 50, a fifth lens group 70 is disposed on the other side of the light guide module 50, the first lens group 10 is correspondingly disposed with the first transmissive lens element 140 on the rear cover 200, the second lens group 20 is correspondingly disposed with the second transmissive lens element 150 on the rear cover 200, and the fifth lens group 70 is correspondingly disposed with a transmissive region on the display 300. The light guide module 50 may reflect a light ray from any front lens group to the rear lens group. In other words, in this case, the front lens group and the rear lens group form a periscope structure layout as a whole. In addition, the first lens group 10 and the second lens group 20 are equivalent to a rear-facing lens assembly of the electronic device 1000, and the fifth lens group 70 is equivalent to a front-facing lens assembly of the electronic device 1000.

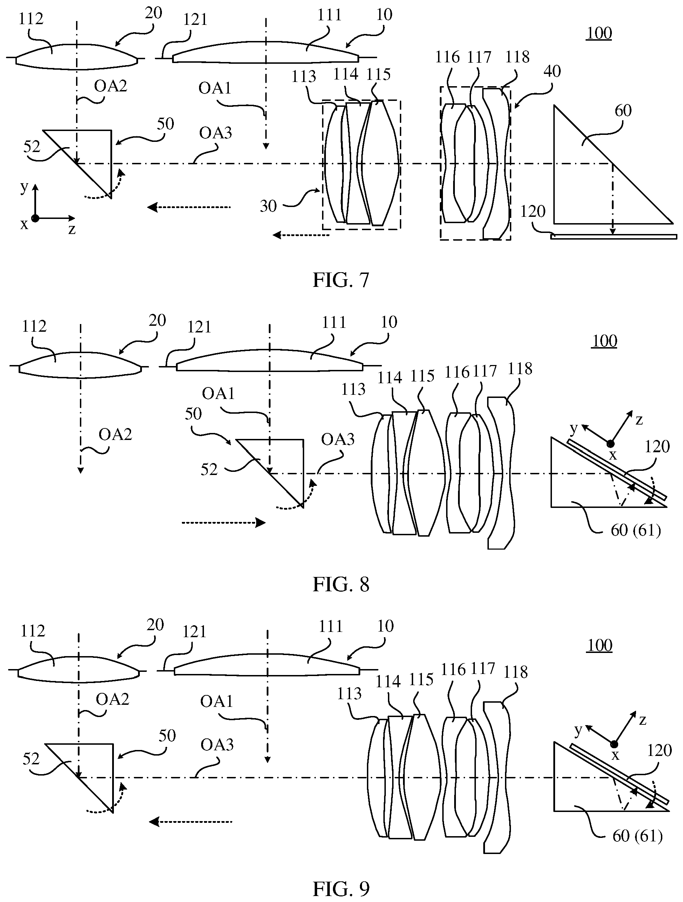

FIG. 6 is a diagram of still another structure of the camera module 100 in the first imaging mode according to an embodiment of this application. FIG. 7 is a diagram of a structure of the camera module 100 shown in FIG. 6 in the second imaging mode. The camera module 100 provided in this embodiment may be considered as a more specific and subordinate implementation of the camera module 100 shown in FIG. 2. The following continues to describe structural details of the optical lens assembly 110 with reference to FIG. 6 and FIG. 7.

As shown in FIG. 6 and FIG. 7, in this embodiment, the front lens group includes the first lens group 10 and the second lens group 20, the light guide module 50 includes a movable reflector 52, and the rear lens group includes the third lens group 30 and the fourth lens group 40. The first lens group 10 and the second lens group 20 are disposed in parallel on an object side of the movable reflector 52 as non-shared lens groups, and the third lens group 30 and the fourth lens group 40 are sequentially disposed on an image side of the movable reflector 52 along the optical axis as shared lens groups.

The first lens group 10 is located on the object side of the movable reflector 52, and is configured to receive an external light ray. The first lens group 10 includes at least one lens, for example, includes a first lens 111. In addition, according to a specific imaging requirement, the first lens group 10 may further include two, three, or more lenses. The second lens group 20 is located on the object side of the movable reflector 52, and is configured to receive an external light ray. The second lens group 20 includes at least one lens, for example, includes a second lens 112. In addition, according to a specific imaging requirement, the first lens group 10 may further include two, three, or more lenses.

In a specific implementation of the light guide module 50, the light guide module 50 includes the movable reflector 52. The movable reflector 52 is located between the front lens group and the third lens group 30, and can move (for example, translate) between a first position and a second position. When the movable reflector 52 is located at the first position shown in FIG. 6, the movable reflector 52 reflects the first light ray from the first lens group 10 to the third lens group 30. In this case, the optical lens assembly 110 enters the first imaging mode. When the movable reflector 52 is located at the second position shown in FIG. 7, the movable reflector 52 reflects the second light ray from the second lens group 20 to the third lens group 30. In this case, the optical lens assembly 110 enters the second imaging mode. A focal length of the first lens group 10 is different from that of the second lens group 20. The movable reflector 52 is controlled to switch between the first position and the second position, so that an effective focal length of the optical lens assembly 110 can be changed, in other words, an optical zoom function is achieved.

When the movable reflector 52 is moved to the first position shown in FIG. 6, the optical lens assembly 110 works in the first imaging mode. The first light ray from the first lens group 10 is reflected by the movable reflector 52 to the third lens group 30, and then is emitted into the image sensor 120 after sequentially passing through the fourth lens group 40, the second reflector 60, and the like. However, the second light ray from the second lens group 20 cannot enter the third lens group 30. For example, the second light ray is emitted to another region inside the electronic device 1000, and is absorbed or consumed. In other words, in this case, the movable reflector 52 is connected to a first optical axis OA1 corresponding to the first light ray and an emergent optical axis of the movable reflector 52, namely, a third optical axis OA3, and a second optical axis OA2 corresponding to the second light ray is disconnected from the third optical axis OA3.

When the movable reflector 52 is moved to the second position shown in FIG. 7, the optical lens assembly 110 works in the second imaging mode. The second light ray from the second lens group 20 is reflected by the movable reflector 52 to the third lens group 30, and then is emitted into the image sensor 120 after sequentially passing through the fourth lens group 40, the second reflector 60, and the like. However, the first light ray from the first lens group 10 cannot enter the third lens group 30. For example, the first light ray is emitted to another region inside the electronic device 1000, and is absorbed or consumed. In other words, in this case, the movable reflector 52 is connected to the second optical axis OA2 and the third optical axis OA3, and the first optical axis OA1 is disconnected from the third optical axis OA3.

In some examples, the movable reflector 52 may be driven by any power component like an electric motor, a motor, or a cylinder to move between the first position and the second position. For example, an electric motor may be used as a power component, and the movable reflector 52 is driven by a ball screw assembly to move between the first position and the second position.

In some examples, there may be more front lens groups. In this case, the movable reflector 52 can move (for example, translate) between more positions including the first position and the second position. For example, the front lens group further includes a fifth lens group 70, and the movable reflector 52 can be further moved to a third position. When the movable reflector 52 is located at the third position, the movable reflector 52 reflects a third light ray from the fifth lens group 70 to the third lens group 30.

In some examples, the movable reflector 52 may be a reflection mirror (mirror) or a prism (prism), for example, a right-angle prism.

In some examples, a reflective surface of the movable reflector 52 may be a metal reflection film layer prepared by using a vapor deposition method or a sputtering method, and the metal may be nickel, aluminum, silver, gold, or the like, or an alloy thereof.

In some examples, a high-reflectivity film layer design may be used, and a high-reflectivity film layer is disposed on the reflective surface, to improve imaging quality.

In some examples, in consideration of a cutoff capability of an optical system for near-infrared light and ultraviolet light, the film layer on the reflective surface may be designed to have a high-reflectivity characteristic of visible light (380 nm to 780 nm) and a high-transmission characteristic in an ultraviolet range (below 380 nm) and a near-infrared range (above 780 nm), so that less invisible light can enter the image sensor 120, to improve imaging quality.

In some examples, a reflectivity of the reflective surface may be required to be greater than 95% within a visible light bandwidth range, and no reflectivity constraint is imposed on ultraviolet light and near infrared light.

In some examples, the reflective surface of the movable reflector 52 may be a plane, and have good machinability. In addition, the reflective surface of the movable reflector 52 may alternatively be a spherical surface (a concave surface or a convex surface), a cylindrical surface (with a curvature in one direction and linear extension in another direction), or a freeform surface. In this case, when reflecting light rays, the reflective surface of the movable reflector 52 may further correct astigmatism and an aberration, to further improve imaging quality or reduce a volume.

In this embodiment of this application, the movable reflector 52 is further configured to compensate for vibration to implement optical image stabilization. As shown in FIG. 6, when the movable reflector 52 is located at the first position, the movable reflector 52 can be driven by an image stabilization motor to perform optical image stabilization on the optical lens assembly 110 working in the first imaging mode. As shown in FIG. 7, when the movable reflector 52 is located at the second position, the movable reflector 52 can be driven by the image stabilization motor to perform optical image stabilization on the optical lens assembly 110 working in the second imaging mode.

In some examples, the power component may drive the movable reflector 52 and the image stabilization motor to move between the first position and the second position together. In this way, regardless of whether the movable reflector 52 is located at the first position or the second position, the movable reflector 52 can be driven by a same image stabilization motor to perform optical image stabilization, thereby simplifying an image stabilization design.

In some examples, that the movable reflector 52 performs jitter compensation to implement optical image stabilization may be that the image stabilization motor drives the movable reflector 52 to rotate around the y-axis in FIG. 6, that is, drives the movable reflector 52 to perform a head shake motion, to implement yaw axis image stabilization. In addition, the image stabilization motor may further drive the movable reflector 52 to rotate around the x-axis perpendicular to the paper in FIG. 6, that is, drive the movable reflector 52 to perform a nodding (head-up) motion, to implement pitch axis image stabilization.

The rear lens group is located on the image side of the movable reflector 52, and is configured to: converge a light ray reflected by the movable reflector 52 and image the light ray on the image sensor 120. The rear lens group includes one or more lenses, to improve specifications of the optical lens assembly 110 and improve imaging quality. For example, the rear lens group may include two to eight lenses, for example, two, four, five, or six lenses.

As shown in FIG. 6 and FIG. 7, the rear lens group includes the third lens group 30 and the fourth lens group 40 that are sequentially disposed from the object side to the image side. The third lens group 30 includes at least one lens, for example, may include two, three, four, or more lenses. The fourth lens group 40 includes at least one lens, for example, may include two, three, four, or more lenses. In this embodiment, the third lens group 30 includes a third lens 113, a fourth lens 114, and a fifth lens 115, and the fourth lens group 40 includes a sixth lens 116, a seventh lens 117, and an eighth lens 118.

In this embodiment of this application, the third lens group 30 is a focusing lens group, and the fourth lens group 40 is a lens group with a fixed position. The third lens group 30 can move forward and backward on the third optical axis OA3, thereby implementing an auto focus process.

In this application, a distance between the third lens group 30 and the fourth lens group 40 is changed, so that the optical lens assembly 110 can implement both long-distance long-focus image shooting with high imaging quality and a strong close-up image shooting capability, to implement wide-object-distance imaging from a distant scene to a close-up scene. However, in a single-group focusing manner, a motion manner of a focusing structure of the optical lens assembly can be simplified, to simplify a focusing method.

As shown in FIG. 6, when the optical lens assembly 110 focuses on the distant scene (at infinity), the third lens group 30 moves toward the image side along the optical axis, a light ray reflected by an object in the distant scene is imaged on an imaging surface of the image sensor 120 after passing through the optical lens assembly 110, and the camera module 100 can shoot an image of the distant scene. As shown in FIG. 7, when the optical lens assembly 110 focuses on the close-up scene, the third lens group 30 moves toward the object side along the optical axis, a light ray reflected by an object in the close-up scene is imaged on the imaging surface of the image sensor 120 after passing through the optical lens assembly 110, and the camera module 100 can shoot an image of the close-up scene.

As shown in FIG. 6, in a focusing process in which the optical lens assembly 110 switches from the close-up scene to the distant scene, the third lens group 30 moves toward the image side along the optical axis, the fourth lens group 40 remains stationary, a distance between the third lens group 30 and the fourth lens group 40 decreases, a distance between the third lens group 30 and the image sensor 120 decreases, and a distance between the fourth lens group 40 and the image sensor 120 remains unchanged.

As shown in FIG. 7, in a focusing process in which the optical lens assembly 110 switches from the distant scene to the close-up scene, the third lens group 30 moves toward the object side along the optical axis, the fourth lens group 40 remains stationary, a distance between the third lens group 30 and the fourth lens group 40 increases, a distance between the third lens group 30 and the image sensor 120 increases, and a distance between the fourth lens group 40 and the image sensor 120 remains unchanged.

In this embodiment, focusing is performed by moving the third lens group 30 and securing the fourth lens group 40, so that during focusing on the close-up scene, an object-side surface of the optical lens assembly 110 is close to a photographed object, a light ray deviation is small, an aberration is reduced, and imaging quality is improved.

In some examples, the third lens group 30 may be driven by a focusing motor to move along the optical axis. For example, the third lens 113, the fourth lens 114, and the fifth lens 115 of the third lens group 30 are simultaneously driven by the focusing motor to integrally move together toward the object side or the image side along the third optical axis OA3, so as to implement the foregoing focusing process. The focusing motor may be, for example, a voice coil motor, a piezoelectric motor, a shape memory alloy motor, or a stepper motor.

In some examples, a plurality of lenses of the optical lens assembly 110 may be made of a same material, for example, glass or resin. The glass has a high refractive index and a low expansion property, so that the optical lens assembly 110 has better imaging quality and a low thermal drift property. The resin has a low density, so that a weight of a lens group can be reduced, to facilitate movement, and improve a focusing capability of the optical lens assembly 110. In some other embodiments, at least one of the plurality of lenses of the optical lens assembly 110 is made of a material different from that of another lens. This is not limited in this application.

In some examples, the plurality of lenses of the optical lens assembly 110 may be processed and formed by using a process such as injection molding, compression molding, and/or polishing and grinding.

In some embodiments, an optical surface of at least one lens of the optical lens assembly 110 is an aspheric surface, and the optical surface of an aspheric shape has different focal powers from a paraxial axis to an outer field of view region, so that an imaging picture has more balanced image quality. In addition/alternatively, the optical surface of the at least one lens of the optical lens assembly 110 may be a freeform surface, to correct an aberration. The aspheric surface is a surface that is rotationally symmetric around an optical axis. The freeform surface may have no symmetry axis, or may be symmetric in one direction, or may be symmetric in two directions.

In some examples, the plurality of lenses of the optical lens assembly 110 are assembled by using an active alignment (active alignment, AA) process, to ensure assembly accuracy.

In some examples, an optical surface of at least one lens of the optical lens assembly 110 may form a diffraction grating structure. By properly disposing the diffraction grating structure, a chromatic aberration can be reduced, and a volume of the optical lens assembly 110 can also be reduced.

In some examples, the optical lens assembly 110 may further include a liquid lens (not shown in the figure), to enhance a focusing effect and implement ultra-close-up image shooting. The liquid lens is a mechanical part that uses liquid as a lens and changes a focal length by changing a curvature of the liquid.

In some examples, at least one lens of the optical lens assembly 110 may be made by using a special-shape technology, to reduce a size of the optical lens assembly 110, so that the optical lens assembly 110 can be better applied to a miniaturized electronic device 1000, and an application scope of the optical lens assembly 110 is increased. A notch may be implemented by using an I-CUT process. In addition, because a height of a lens is decreased through a notch, a large clear aperture may be set for the lens, so that an amount of light admitted through the optical lens assembly 110 is increased, and imaging quality of the optical lens assembly 110 is better. The special-shape technology may alternatively be used on a structural support like a lens tube or a partition of a lens, to reduce the size of the optical lens assembly 110.

In some examples, a peripheral surface or a support surface of at least one lens of the optical lens assembly 110 may be blackened or roughened, to eliminate stray light and improve imaging quality. The blackening may be to coat or plate black ink or another extinction material, or may be to bond a film. The roughening is mainly used to increase roughness.

As shown in FIG. 6 and FIG. 7, the optical lens assembly 110 further includes the second reflector 60 located on an image side of the fourth lens group 40. The second reflector 60 is configured to reflect or deflect a light ray from the fourth lens group 40 to the image sensor 120.

In this embodiment of this application, an additional reflector is disposed at a rear end of an optical path to deflect a propagation angle of the light ray, so that a placement direction of the image sensor 120 can be flexibly adjusted, to better utilize space. In this case, the light rays are deflected a total of 180° twice, and a plane on which the image sensor 120 is located may be parallel to the display 300 of the electronic device 1000. Therefore, disposition of the image sensor 120 is no longer limited to a thickness size of the electronic device 1000, and an image sensor of a larger size can be disposed. This helps improve imaging quality.

For example, the second reflector 60 may be a reflection mirror or a prism.

As shown in FIG. 6 and FIG. 7, the optical lens assembly 110 may further include an aperture stop 121, and the aperture stop 121 may be mounted on the front lens group, for example, mounted on the first lens group 10 and the second lens group 20. In this case, an aperture adjustment effect of the aperture stop 121 is better, and imaging quality of the optical lens assembly 110 can be improved. For example, the aperture stop 121 may be mounted on an end of the front lens group close to the object side. In addition, the aperture stop 121 may alternatively be mounted on another lens of the front lens group, the third lens group 30, the fourth lens group 40, or another position of the optical lens assembly 110. This is not strictly limited in embodiments of this application.

The aperture stop 121 may be of a spacer ring structure or a variable blade structure; or the aperture stop 121 may be implemented by using a surface spraying process, for example, the aperture stop 121 is formed by spraying a light shielding material on a lens. A position of the aperture stop 121 may be fixed or may be variable. For example, the position of the aperture stop 121 is variable, and the position of the aperture stop 121 may be adjusted based on a focusing case, to be located between different lenses.

Based on specific optical data, the following describes a specific solution of the optical lens assembly 110 shown in FIG. 6 in a possible embodiment.

Refer to Table 1, Table 2a, and Table 2b together. Table 1 lists a curvature radius, a thickness, a refractive index (Nd), and an Abbe number of each lens in the optical lens assembly 110 shown in FIG. 6 in a possible embodiment. The thickness includes a thickness of a lens, and also includes a distance between lenses. Table 2a and Table 2b list aspheric coefficients of each lens in the optical lens assembly 110 shown in FIG. 6 in a possible embodiment.

**Table 1:**

| Surface number | Description | Surface type | Curvature radius | Thickness (mm) | Refractive index | Abbe number |
|---|---|---|---|---|---|---|
| S1 | First lens 111 | Aspheric | 25.65936 | 1.09801222 | 1.662 | 36.6 |
| S2 | | Aspheric | 651.63310 | 0.8 | | |
| S3 | Second lens 112 | Aspheric | 20.8 | 1.6 | 1.487 | 70.4 |
| S4 | | Aspheric | -1120 | 0.8 | | |
| S5 | Third lens 113 | Aspheric | 12.55039 | 3.18445879 | 1.677 | 19.2 |
| S6 | | Aspheric | 6.18494 | 0.27669890 | | |
| S7 | Fourth lens 114 | Aspheric | 6.61137 | 3.08326863 | 1.544 | 56 |
| S8 | | Aspheric | -7.4853 | 0.03 | | |
| S9 | Fifth lens 115 | Aspheric | -11.79606 | 0.35 | 1.677 | 19.2 |
| S10 | | Aspheric | -16.09155 | 1.54657284 | | |
| S11 | Sixth lens 116 | Aspheric | -2.8453 | 0.47556432 | 1.559 | 42.2 |
| S12 | | Aspheric | -5.38159 | 1.05891858 | | |
| S13 | Seventh lens 117 | Aspheric | 836.22086 | 1.17402283 | 1.640 | 23.3 |
| S14 | | Aspheric | -5.61224 | 0.2506312 | | |
| S15 | Eighth lens 118 | Aspheric | -2.36869 | 0.35000123 | 1.575 | 33 |
| S16 | | Aspheric | -4.83889 | 0.35986359 | | |

**Table 2a:**

| Surface number | A4 | A6 | A8 | A10 | A12 | A14 | A16 | A18 |
|---|---|---|---|---|---|---|---|---|
| S1 | 2.53E-06 | 1.09E-08 | 2.44E-10 | -2.57E-12 | 8.56E-15 | -1.36E-17 | 1.07E-20 | -3.65E-24 |
| S2 | -1.71E-05 | 4.50E-08 | -5.65E-11 | 4.06E-14 | -1.79E-17 | 4.89E-21 | -8.15E-25 | 7.56E-29 |
| S3 | 9.53E-06 | -1.36E-09 | 1.03E-09 | -9.98E-12 | 3.68E-14 | -6.89E-17 | 6.98E-20 | -3.57E-23 |
| S4 | -3.50E-06 | 4.30E-08 | -7.47E-11 | 6.14E-14 | -2.90E-17 | 8.24E-21 | -1.40E-24 | 1.32E-28 |
| S5 | -7.52E-04 | 3.18E-05 | -2.13E-05 | 6.17E-06 | -1.17E-06 | 1.54E-07 | -1.52E-08 | 1.24E-09 |
| S6 | -1.72E-03 | -1.99E-04 | 1.17E-04 | -6.49E-05 | 2.23E-05 | -5.19E-06 | 8.55E-07 | -1.01E-07 |
| S7 | -8.29E-04 | 1.79E-05 | -3.30E-05 | 1.25E-05 | -4.47E-06 | 1.11E-06 | -1.88E-07 | 2.31E-08 |
| S8 | -2.53E-03 | 3.59E-03 | -8.63E-04 | -1.59E-04 | 1.28E-04 | -3.16E-05 | 4.31E-06 | -3.46E-07 |
| S9 | -5.89E-03 | 3.58E-03 | -8.35E-04 | -4.93E-05 | 3.42E-05 | 5.64E-06 | -4.56E-06 | 1.05E-06 |
| S10 | -2.68E-03 | -2.34E-04 | 7.70E-04 | -4.86E-04 | 1.71E-04 | -4.05E-05 | 7.16E-06 | -9.88E-07 |
| S11 | 6.97E-02 | -2.26E-02 | 4.40E-03 | 1.61E-03 | -2.15E-03 | 1.19E-03 | -4.27E-04 | 1.08E-04 |
| S12 | 6.97E-02 | -2.07E-02 | 5.60E-03 | -1.75E-03 | 9.10E-04 | -5.05E-04 | 2.11E-04 | -6.32E-05 |
| S13 | 7.40E-03 | -7.20E-03 | 4.13E-03 | -3.27E-03 | 2.57E-03 | -1.54E-03 | 6.66E-04 | -2.05E-04 |
| S14 | 5.51E-03 | -3.57E-03 | -3.47E-03 | 4.70E-03 | -2.90E-03 | 1.17E-03 | -3.28E-04 | 6.59E-05 |
| S15 | 4.81E-02 | -2.04E-02 | 4.00E-03 | 2.16E-03 | -2.43E-03 | 1.20E-03 | -3.81E-04 | 8.45E-05 |
| S16 | 3.91E-02 | -1.48E-02 | 5.89E-03 | -2.03E-03 | 5.28E-04 | -1.00E-04 | 1.37E-05 | -1.31E-06 |

**Table 2b:**

| Surface number | A20 | A22 | A24 | A26 | A28 | A30 |
|---|---|---|---|---|---|---|
| S1 | 2.22E-28 | | | | | |
| S2 | -3.00E-33 | | | | | |
| S3 | 7.14E-27 | | | | | |
| S4 | -5.26E-33 | | | | | |
| S5 | -9.00E-11 | 5.60E-12 | -2.63E-13 | 8.27E-15 | -1.51E-16 | 1.21E-18 |
| S6 | 8.42E-09 | -4.95E-10 | 1.99E-11 | -5.19E-13 | 7.92E-15 | -5.36E-17 |
| S7 | -2.15E-09 | 1.50E-10 | -7.44E-12 | 2.44E-13 | -4.70E-15 | 3.99E-17 |
| S8 | 1.38E-08 | 1.31E-10 | -4.57E-11 | 2.36E-12 | -5.67E-14 | 5.50E-16 |
| S9 | -1.35E-07 | 1.11E-08 | -5.96E-10 | 2.02E-11 | -3.97E-13 | 3.43E-15 |
| S10 | 1.07E-07 | -8.70E-09 | 5.08E-10 | -1.98E-11 | 4.56E-13 | -4.69E-15 |
| S11 | -1.97E-05 | 2.56E-06 | -2.32E-07 | 1.39E-08 | -4.95E-10 | 7.95E-12 |
| S12 | 1.35E-05 | -2.07E-06 | 2.22E-07 | -1.58E-08 | 6.72E-10 | -1.29E-11 |
| S13 | 4.52E-05 | -7.06E-06 | 7.64E-07 | -5.44E-08 | 2.29E-09 | -4.33E-11 |
| S14 | -9.54E-06 | 9.80E-07 | -6.93E-08 | 3.19E-09 | -8.48E-11 | 9.73E-13 |
| S15 | -1.34E-05 | 1.51E-06 | -1.19E-07 | 6.17E-09 | -1.90E-10 | 2.64E-12 |
| S16 | 8.02E-08 | -2.36E-09 | -5.44E-11 | 7.98E-12 | -2.95E-13 | 4.05E-15 |

The aspheric surfaces in the optical lens assembly 110 in Table 1 may be defined by using, but not limited to, the following aspheric surface curve equation: $z = \frac{{cr}^{2}}{1 + \sqrt{1 - \left(1+k\right) {c}^{2} {r}^{2}}} + {\sum }_{i = 1}^{N} {α}_{i} {r}^{2 i}$

Herein, z is a relative distance between a point that is on the aspheric surface and that is at a distance of r from the optical axis and a tangent plane that is tangent to the aspheric surface at an intersection with the optical axis; r is a vertical distance between the point on the aspheric curve and the optical axis; c is a curvature; k is a cone coefficient; and αᵢ is an i^{th}-order aspheric coefficient. For details, refer to Table 2a and Table 2b.

**Table 3:**

| Parameters | EFLG1 | EFLG2 | EFL1 | EFL2 | EFLG1/EFL1 | EFLG2/EFL2 | Fd |
|---|---|---|---|---|---|---|---|
| Values | 40 mm | 36 mm | 24 mm | 33 mm | 1.67 | 1.09 | 87.84 mm |
| Parameters | ImgH1 | ImgH2 | F1 | F2 | F2/F1 | Mag | |
| Values | 12.5 mm | 6.88 mm | 83 mm | 207 mm | 2.49 | 0.27 | |

Table 3 provides information about other parameters of the optical lens assembly 110. The other parameters include, for example, a focal length EFLG1 of the first lens group 10, a focal length EFLG2 of the second lens group 20, an effective focal length EFL1 of the optical lens assembly 110 working in the first imaging mode, a maximum image height ImgH1, an equivalent focal length F1, a magnification ratio Mag at a shortest focusing distance Fd, an effective focal length EFL2 of the optical lens assembly 110 working in the second imaging mode, a maximum image height ImgH2, and an equivalent focal length F2. EFL2>EFL1. It can be obtained through calculation that EFLG1/EFL1=1.67>0.5, EFLG2/EFL2=1.09>1.1, and F2/F1=2.49>1. It can be ensured that, regardless of whether the first lens group 10 or the second lens group 20 is used for imaging, a quantity of light rays reflected by the movable reflector 52 to the rear lens group (namely, the image sensor 120) in different image stabilization states (namely, at different positions) does not differ greatly. In other words, it can be ensured that imaging definition does not differ greatly in different image stabilization states, ensuring that the optical lens assembly 110 always has good imaging quality. In addition, it can be ensured that the optical lens assembly 110 has a large zoom ratio.

FIG. 8 is a diagram of still another structure of the camera module 100 in the first imaging mode according to an embodiment of this application. FIG. 9 is a diagram of a structure of the camera module 100 shown in FIG. 8 in the second imaging mode. The camera module 100 provided in this embodiment may be considered as a more specific and subordinate implementation of the camera module 100 shown in FIG. 2. Compared with the camera module 100 shown in FIG. 6 and FIG. 7, the image sensor 120 in this embodiment can also compensate for vibration.

Specifically, the movable reflector 52 is further configured to compensate for vibration to implement optical image stabilization. As shown in FIG. 8, when the movable reflector 52 is located at the first position, the movable reflector 52 can be driven by an image stabilization motor to perform optical image stabilization on the optical lens assembly 110 working in the first imaging mode. As shown in FIG. 9, when the movable reflector 52 is located at the second position, the movable reflector 52 can be driven by the image stabilization motor to perform optical image stabilization on the optical lens assembly 110 working in the second imaging mode.

In addition, in this embodiment, the image sensor 120 is also configured to compensate for vibration to implement optical image stabilization. For example, the image stabilization motor may drive the image sensor 120 to translate or rotate, to compensate for vibration. In this way, image stabilization (namely, image stabilization for a lens assembly) of the movable reflector 52 and image stabilization of the image sensor 120 can be combined to obtain a better image stabilization effect, thereby further ensuring image shooting quality, and improving image shooting experience of the user.

In some examples, that the image sensor 120 performs jitter compensation to implement optical image stabilization may be that the image sensor 120 may be driven by the image stabilization motor to perform a translational motion along an x-axis in FIG. 8 to implement x-axis image stabilization, or perform a translational motion along a y-axis in FIG. 8 to implement y-axis image stabilization. In addition, the image stabilization motor may further drive the image sensor 120 to perform a rotation motion in a plane defined by the x-axis and the y-axis, to implement roll (roll) axis image stabilization. In this way, based on the yaw axis image stabilization and the pitch axis image stabilization of the movable reflector 52, the optical lens assembly 110 can implement five-axis image stabilization, so that an image stabilization effect is better.

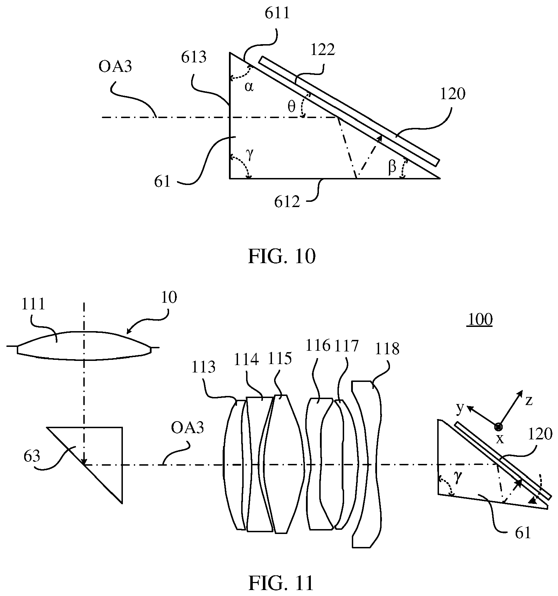

In this embodiment of this application, the second reflector 60 includes a prism 61, or in other words, the second reflector 60 is a prism 61. FIG. 10 is a diagram of a structure of the prism 61 according to an embodiment of this application. As shown in FIG. 8 to FIG. 10, the camera module 100 provided in this embodiment of this application includes a rear lens group, the prism 61, and the image sensor 120.

The rear lens group has a third optical axis OA3, and a plurality of lenses in the rear lens group are sequentially spaced apart along the third optical axis OA3. The prism 61 has an incident surface 613, a first reflective surface 611, and a second reflective surface 612. The prism 61 is configured such that a light ray from the rear lens group is incident to the inside of the prism 61 through the incident surface 613, then is sequentially reflected by the first reflective surface 611 and the second reflective surface 612, and then is emitted from the first reflective surface 611 to the image sensor 120. A photosensitive surface 122 of the image sensor 120 faces the first reflective surface 611, and the photosensitive surface 122 is disposed obliquely relative to the third optical axis OA3. The image sensor 120 is further configured to compensate for vibration to implement optical image stabilization.

According to the camera module 100 provided in this embodiment of this application, after the light ray from the rear lens group is incident to the inside of the prism 61, the light ray can be reflected by the first reflective surface 611 and then by the second reflective surface 612 in sequence, and then is emitted from the first reflective surface 611 to the image sensor 120. The photosensitive surface 122 of the image sensor 120 faces the first reflective surface 611, and the photosensitive surface 122 is disposed obliquely relative to the third optical axis OA3. The image sensor 120 is usually of a sheet-like structure, and the photosensitive surface 122 is disposed obliquely relative to the third optical axis OA3. In other words, the image sensor 120 is disposed obliquely relative to the third optical axis OA3. The image sensor 120 in this embodiment of this application is further configured to compensate for vibration to implement optical image stabilization. Because the image sensor 120 is disposed obliquely, an image stabilization motor (not shown in the figure) that drives the image sensor 120 to compensate for vibration may also be disposed obliquely. Therefore, space of a module in a thickness direction perpendicular to the third optical axis OA3 can be saved, and no additional or excessive thickness space is occupied due to disposition of the image stabilization motor. In other words, a size of the camera module 100 in the thickness direction can be reduced, which helps reduce a volume of the camera module 100, and further facilitates a light and thin design of the electronic device 1000.

In this embodiment of this application, the first reflective surface 611 can not only reflect a light ray, but also transmit the light ray from the first reflective surface 611 to the image sensor 120. Specifically, after the light ray is incident to the inside of the prism 61 through the incident surface 613, the light ray is first emitted to the first reflective surface 611 at an angle greater than a critical angle, total internal reflection (total internal reflection, TIR) occurs on the first reflective surface 611, and the light ray is reflected to the second reflective surface 612. Then, the light ray is reflected on the second reflective surface 612, and is deflected to the first reflective surface 611 again. Under the deflection effect of the second reflective surface 612, an incident angle of the light ray from the second reflective surface 612 is less than the critical angle. Therefore, the light ray can be transmitted from the first reflective surface to the image sensor 120, instead of being totally internally reflected again.

In this embodiment of this application, that the photosensitive surface 122 is disposed obliquely relative to the third optical axis OA3 means that the photosensitive surface 122 is neither parallel to nor perpendicular to the third optical axis OA3. In some examples, an included angle between the photosensitive surface 122 and the third optical axis OA3 is θ, and 15°≤θ<45°. For example, a value of θ may be 20°, 25°, 27.5°, 30°, 35°, or 40°.

In this way, the image sensor 120 can be disposed obliquely as much as possible, and thickness space can be saved as much as possible. In addition, angle requirements in an optical design can be considered. For example, it is convenient for the light ray to undergo total internal reflection on the first reflective surface, and it is convenient for the light ray to be emitted from the first reflective surface 611 at a vertical angle and to be incident to the photosensitive surface 122 at a vertical angle. In other words, the foregoing angle selection can further reduce difficulty in the optical design, and help improve imaging quality.

In some examples, the incident surface 613, the first reflective surface 611, the second reflective surface 612, and the photosensitive surface 122 are all planes. The first reflective surface 611 and the photosensitive surface 122 may be disposed in parallel.

In some examples, an included angle β between the first reflective surface 611 and the second reflective surface 612 may be an acute angle, for example, β is less than 45° or less than 35°, so that the second reflective surface 612 can reflect the light ray back to the first reflective surface 611.

In some examples, a reflective film layer may be plated on the second reflective surface 612. The reflective film layer may be, for example, a metal reflective film layer such as nickel, aluminum, silver, or gold, to ensure a reflection effect and avoid transmission of the light ray from the second reflective surface 612 to the outside of the prism 61.

In some examples, the second reflective surface 612 and the third optical axis OA3 are parallel to each other, an included angle between the first reflective surface 611 and the incident surface 613 is α, and an included angle between the first reflective surface 611 and the second reflective surface 612 is β, where 0°≤|α-2β|≤10°, for example, 0°≤|α-2β|≤5°.

Because the second reflective surface 612 and the third optical axis OA3 are parallel to each other, values of α and 2β should be as close as possible. A smaller absolute value of α and 2β indicates that a light ray can be emitted from the first reflective surface 611 at an angle closer to a vertical angle. For example, when α=2β, the light ray may be emitted to the image sensor 120 at a 90-degree angle perpendicular to the first reflective surface 611. In this way, it can be ensured that the light ray is emitted from the first reflective surface 611 at a vertical angle or nearly vertical angle. In addition, in this case, only the photosensitive surface 122 needs to be parallel to the first reflective surface 611, so as to ensure that the emitted light ray is emitted into the photosensitive surface 122 at a vertical angle or nearly vertical angle. This helps reduce optical design difficulty.

In some examples, α=2β, an included angle between the second reflective surface 612 and the incident surface 613 is γ, and γ may be an acute angle, a right angle, or an obtuse angle. For example, γ may be a right angle of 90°. In this case, α is 60°, and β is 30°. Alternatively, γ may be an obtuse angle of 97.5°. In this case, α is 55°, and β is 27.5°.

The foregoing structures or disposition manners of the prism 61, the image sensor 120, and the like provided in embodiments of this application may also be applied to a conventional periscope camera module. FIG. 11 is a diagram of still another structure of the camera module 100 according to an embodiment of this application. As shown in FIG. 11, the camera module 100 may be a conventional periscope camera module. The camera module 100 further includes a third reflector 63 that is located on an object side of a rear lens group and is configured to: reflect a light ray to the rear lens group, and then emit the light ray into the obliquely disposed image sensor 120 through the prism 61.

In some examples, the third reflector 63 may be a reflection mirror or a prism. The third reflector 63 may be further configured to compensate for vibration to implement optical image stabilization of the lens assembly.

In some examples, a front lens group, for example, the first lens group 10 in FIG. 11, may be further disposed on an object side of the third reflector 63. In this case, the light ray is first converged by the first lens group 10 and then emitted into the third reflector 63.

In some examples, as shown in FIG. 11, to reduce a volume of the prism, without affecting optical imaging, a vertex angle between the incident surface 613 and the first reflective surface 611 and a vertex angle between the first reflective surface 611 and the second reflective surface 612 may be cut off. In this case, an included angle between the incident surface 613 and the first reflective surface 611 is an included angle between extension lines of the two surfaces, and an included angle between the first reflective surface 611 and the second reflective surface 612 is an included angle between extension lines of the two surfaces.

In some examples, as shown in FIG. 8 and FIG. 9, the rear lens group may alternatively include only one lens group. In this case, a plurality of lenses in the rear lens group may be sequentially secured to an optical path from the object side to the image side. In other words, the rear lens group may include only one lens group with a fixed position.

In some examples, with reference to the embodiments shown in FIG. 4 to FIG. 7, the rear lens group includes the third lens group 30 and the fourth lens group 40 that are sequentially arranged along the third optical axis OA3, and at least one of the third lens group 30 and the fourth lens group 40 is a focusing lens group that is movable along the third optical axis OA3. For example, the third lens group 30 is a focusing lens group, and the fourth lens group 40 is a fixed lens group.

In some examples, the rear lens group may alternatively include three, four, five, or more lens groups that are sequentially arranged along the third optical axis OA3, where at least one lens group is a focusing lens group, and the remaining lens groups are fixed lens groups. For example, the rear lens group may also include a sixth lens group (not shown in the figure), the third lens group 30, and the fourth lens group 40 that are sequentially arranged along the third optical axis OA3. The sixth lens group and the fourth lens group 40 are fixed lens groups, and the third lens group 30 located in the middle is a movable focusing lens group.

Based on specific optical data, the following describes a specific solution of the optical lens assembly 110 shown in FIG. 8 in a possible embodiment.

Refer to Table 4, Table 5a, and Table 5b together. Table 4 lists a curvature radius, a thickness, a refractive index (Nd), and an Abbe number of each lens in the optical lens assembly 110 shown in FIG. 8 in a possible embodiment. The thickness includes a thickness of a lens, and also includes a distance between lenses. Table 5a and Table 5b list aspheric coefficients of each lens in the optical lens assembly 110 shown in FIG. 8 in a possible embodiment.

**Table 4:**

| Surface number | Description | Surface type | Curvature radius | Thickness (mm) | Refractive index | Abbe number |
|---|---|---|---|---|---|---|
| S1 | First lens 111 | Aspheric | 17.9 | 1.45 | 1.578 | 60.4 |
| S2 | | Aspheric | 146.0 | 13.40 | | |
| S3 | Second lens 112 | Aspheric | 20.7 | 0.98 | 1.497 | 81.6 |
| S4 | | Aspheric | -197.0 | 0.20 | | |
| S5 | Third lens | Aspheric | -9.64 | 1.05 | 1.651 | 21.8 |
| S6 | 113 | Aspheric | 25.6 | 0.12 | | |
| S7 | Fourth lens 114 | Aspheric | -13.0 | 0.60 | 1.677 | 19.2 |
| S8 | | Aspheric | -3.3 | 0.66 | | |
| S9 | Fifth lens 115 | Aspheric | -9.3 | 2.11 | 1.543 | 60.0 |
| S10 | | Aspheric | 11.8 | 2.47 | | |
| S11 | Sixth lens 116 | Aspheric | 3.3 | 0.65 | 1.546 | 53.9 |
| S12 | | Aspheric | 3.3 | 0.50 | | |
| S13 | Seventh lens 117 | Aspheric | 8.9 | 0.68 | 1.588 | 30.7 |
| S14 | | Aspheric | 7.6 | 0.63 | | |
| S15 | Eighth lens 118 | Aspheric | 16.4 | 0.81 | 1.553 | 48.3 |
| S16 | | Aspheric | -10.3 | 0.72 | | |

**Table 5a:**

| Surface number | A4 | A6 | A8 | A10 | A12 | A14 | A16 | A18 |
|---|---|---|---|---|---|---|---|---|
| S1 | -3.60E-05 | 2.10E-06 | -2.12E-07 | 1.15E-08 | -2.19E-10 | -1.31E-11 | 1.02E-12 | -3.65E-24 |
| S2 | -2.69E-05 | 8.00E-07 | -3.95E-08 | 8.57E-10 | -1.03E-11 | 7.55E-14 | -3.46E-16 | 7.56E-29 |
| S3 | -6.89E-05 | 1.70E-05 | -2.63E-06 | 2.30E-07 | -1.04E-08 | 1.18E-10 | 1.03E-11 | -5.28E-13 |
| S4 | -7.33E-05 | 2.34E-05 | -4.17E-06 | 4.44E-07 | -2.87E-08 | 1.13E-09 | -2.62E-11 | 3.26E-13 |
| S5 | -6.28E-05 | 5.58E-06 | 9.56E-06 | -1.59E-05 | 9.92E-06 | -3.08E-06 | 5.87E-07 | 1.24E-09 |
| S6 | -1.27E-02 | 4.29E-03 | -2.46E-03 | 1.09E-03 | -3.12E-04 | 6.04E-05 | -8.18E-06 | -1.01E-07 |
| S7 | 5.18E-03 | -1.92E-03 | -4.75E-04 | 6.65E-04 | -2.62E-04 | 5.96E-05 | -8.93E-06 | 2.31E-08 |
| S8 | 2.35E-02 | -9.56E-03 | 3.41E-03 | -8.36E-04 | 1.39E-04 | -1.58E-05 | 1.23E-06 | -3.46E-07 |
| S9 | 4.45E-03 | -1.80E-03 | 5.24E-04 | -6.98E-05 | -3.11E-06 | 2.77E-06 | -5.01E-07 | 1.05E-06 |
| S10 | 3.80E-04 | -2.37E-04 | 7.37E-05 | -1.47E-05 | 1.77E-06 | -1.24E-07 | 4.61E-09 | -9.88E-07 |
| S11 | -3.90E-02 | 8.34E-03 | -2.12E-03 | 6.98E-04 | -2.31E-04 | 6.06E-05 | -1.17E-05 | 0.0001081 |
| S12 | -6.01E-02 | 1.47E-02 | -3.10E-03 | 5.09E-04 | -6.35E-05 | 6.03E-06 | -4.34E-07 | -6.32E-05 |
| S13 | -4.21E-02 | 1.35E-02 | -2.40E-03 | 3.76E-04 | -1.84E-04 | 8.91E-05 | -2.65E-05 | -0.000205 |
| S14 | -2.50E-02 | -1.74E-03 | 6.94E-03 | -3.51E-03 | 9.82E-04 | -1.74E-04 | 1.93E-05 | 6.59E-05 |
| S15 | -2.17E-02 | 2.73E-03 | 3.41E-03 | -2.06E-03 | 6.27E-04 | -1.25E-04 | 1.76E-05 | 8.45E-05 |
| S16 | -5.79E-03 | 1.63E-03 | 1.10E-03 | -7.44E-04 | 2.29E-04 | -4.52E-05 | 6.22E-06 | -1.31E-06 |

**Table 5b:**

| Surface number | A20 | A22 | A24 | A26 | A28 | A30 |
|---|---|---|---|---|---|---|
| S1 | 2.22E-28 | | | | | |
| S2 | -3.00E-33 | | | | | |
| S3 | 1.10E-14 | -1.10E-16 | | | | |
| S4 | -1.68E-15 | | | | | |
| S5 | -9.00E-11 | 5.60E-12 | -2.63E-13 | 8.27E-15 | -1.51E-16 | 1.21E-18 |
| S6 | 8.42E-09 | -4.95E-10 | 1.99E-11 | -5.19E-13 | 7.92E-15 | -5.36E-17 |
| S7 | -2.15E-09 | 1.50E-10 | -7.44E-12 | 2.44E-13 | -4.70E-15 | 3.99E-17 |
| S8 | 1.38E-08 | 1.31E-10 | -4.57E-11 | 2.36E-12 | -5.67E-14 | 5.50E-16 |
| S9 | -1.35E-07 | 1.11E-08 | -5.96E-10 | 2.02E-11 | -3.97E-13 | 3.43E-15 |
| S10 | 1.07E-07 | -8.70E-09 | 5.08E-10 | -1.98E-11 | 4.56E-13 | -4.69E-15 |
| S11 | -1.97E-05 | 2.56E-06 | -2.32E-07 | 1.39E-08 | -4.95E-10 | 7.95E-12 |
| S12 | 1.35E-05 | -2.07E-06 | 2.22E-07 | -1.58E-08 | 6.72E-10 | -1.29E-11 |
| S13 | 4.52E-05 | -7.06E-06 | 7.64E-07 | -5.44E-08 | 2.29E-09 | -4.33E-11 |
| S14 | -9.54E-06 | 9.80E-07 | -6.93E-08 | 3.19E-09 | -8.48E-11 | 9.73E-13 |
| S15 | -1.34E-05 | 1.51E-06 | -1.19E-07 | 6.17E-09 | -1.90E-10 | 2.64E-12 |
| S16 | 8.02E-08 | -2.36E-09 | -5.44E-11 | 7.98E-12 | -2.95E-13 | 4.05E-15 |

The aspheric surfaces in the optical lens assembly 110 in Table 4 may be defined by using, but not limited to, the following aspheric surface curve equation: $z = \frac{{cr}^{2}}{1 + \sqrt{1 - \left(1+k\right) {c}^{2} {r}^{2}}} + {\sum }_{i = 1}^{N} {α}_{i} {r}^{2 i}$

Herein, z is a relative distance between a point that is on the aspheric surface and that is at a distance of r from the optical axis and a tangent plane that is tangent to the aspheric surface at an intersection with the optical axis; r is a vertical distance between the point on the aspheric curve and the optical axis; c is a curvature; k is a cone coefficient; and αᵢ is an i^{th}-order aspheric coefficient. For details, refer to Table 5a and Table 5b.

Table 6 provides information about other parameters of the optical lens assembly 110. The other parameters include, for example, a focal length EFLG1 of the first lens group 10, a focal length EFLG2 of the second lens group 20, an effective focal length EFL1 of the optical lens assembly 110 working in the first imaging mode, a maximum image height ImgH1, an equivalent focal length F1, a magnification ratio Mag at a shortest focusing distance Fd, an effective focal length EFL2 of the optical lens assembly 110 working in the second imaging mode, a maximum image height ImgH2, and an equivalent focal length F2. EFL2>EFL1. It can be obtained through calculation that EFLG1/EFL1=1.5>0.5, EFLG2/EFL2=1.18>1.0, and F2/F1=2.13>1. It can be ensured that, regardless of whether the first lens group 10 or the second lens group 20 is used for imaging, a quantity of light rays reflected by the movable reflector 52 to the rear lens group (namely, the image sensor 120) in different image stabilization states (namely, at different positions) does not differ greatly. In other words, it can be ensured that imaging definition does not differ greatly in different image stabilization states, ensuring that the optical lens assembly 110 always has good imaging quality. In addition, it can be ensured that the optical lens assembly 110 has a large zoom ratio.

**Table 6:**

| Parameters | EFLG1 | EFLG2 | EFL1 | EFL2 | EFLG1/EFL1 | EFLG2/EFL2 | Fd |
|---|---|---|---|---|---|---|---|
| Values | 35.13 mm | 37.60 mm | 23.47 mm | 32 mm | 1.50 | 1.18 | 70 mm |

| Parameters | ImgH1 | ImgH2 | F1 | F2 | F2/F1 | Mag | |
|---|---|---|---|---|---|---|---|
| Values | 12.5 mm | 8 mm | 81.2 mm | 173.1 mm | 2.13 | 0.48 | |

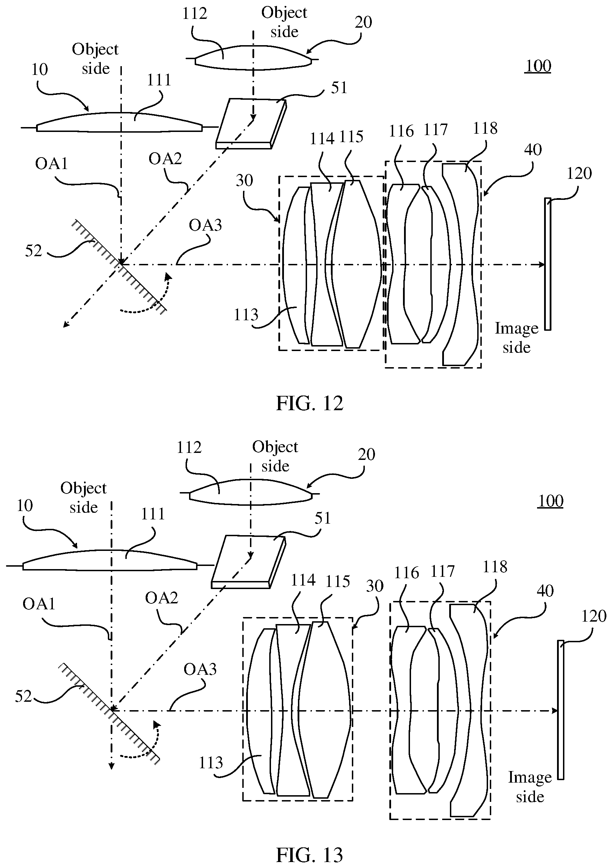

FIG. 12 is a diagram of still another structure of the camera module 100 in the first imaging mode according to an embodiment of this application. FIG. 13 is a diagram of a structure of the camera module 100 shown in FIG. 12 in the second imaging mode. The camera module 100 provided in this embodiment may be considered as a more specific and subordinate implementation of the camera module 100 shown in FIG. 2. Compared with the camera module 100 shown in FIG. 6 and FIG. 7, the light guide module 50 in this embodiment further includes a first reflector 51.

Specifically, as shown in FIG. 12 and FIG. 13, in this embodiment, the light guide module 50 includes the first reflector 51 and the movable reflector 52. The first reflector 51 is located between the second lens group 20 and the movable reflector 52, and is configured to reflect the second light ray to the movable reflector 52. The movable reflector 52 may move (for example, rotate) between a first position and a second position. When the movable reflector 52 is located at the first position shown in FIG. 12, the movable reflector 52 reflects the first light ray from the first lens group 10 to the third lens group 30. In this case, the optical lens assembly 110 enters the first imaging mode. When the movable reflector 52 is located at the second position shown in FIG. 13, the movable reflector 52 reflects the second light ray from the second lens group 20 to the third lens group 30. In this case, the optical lens assembly 110 enters the second imaging mode. A focal length of the first lens group 10 is different from that of the second lens group 20. The movable reflector 52 is controlled to deflect between the first position and the second position, so that an effective focal length of the optical lens assembly 110 can be changed, in other words, an optical zoom function is achieved.

When the movable reflector 52 is rotated to the first position shown in FIG. 12, the optical lens assembly 110 works in the first imaging mode. The first light ray from the first lens group 10 is reflected by the movable reflector 52 to the third lens group 30, and then is emitted to the image sensor 120 through the fourth lens group 40. However, the second light ray from the second lens group 20 cannot enter the third lens group 30. For example, the second light ray is reflected by the movable reflector 52 to a region other than the third lens group 30, or the movable reflector 52 does not reflect the second light ray. In this case, the second light ray may be emitted to another region inside the electronic device 1000, and is absorbed or consumed. In other words, in this case, the movable reflector 52 is connected to the first optical axis OA1 and the third optical axis OA3, and the second optical axis OA2 is disconnected from the third optical axis OA3.

When the movable reflector 52 is moved to the second position shown in FIG. 13, the optical lens assembly 110 works in the second imaging mode. The second light ray from the second lens group 20 is reflected by the movable reflector 52 to the third lens group 30, and then is emitted to the image sensor 120 through the fourth lens group 40. However, the first light ray from the first lens group 10 cannot enter the third lens group 30. For example, the first light ray is reflected by the movable reflector 52 to a region other than the third lens group 30, or the movable reflector 52 does not reflect the first light ray. In this case, the first light ray may be emitted to another region inside the electronic device 1000, and is absorbed or consumed. In other words, in this case, the movable reflector 52 is connected to the second optical axis OA2 and the third optical axis OA3, and the first optical axis OA1 is disconnected from the third optical axis OA3.

In some examples, as shown in FIG. 12, when the movable reflector 52 is located at the first position, a reflection plane of the movable reflector 52 is parallel to the second optical axis OA2, and the reflection plane of the movable reflector 52 forms a 45° included angle with the first optical axis OA1. In this case, the movable reflector 52 reflects the first light ray to the third lens group 30, and does not reflect the second light ray. When the movable reflector 52 is located at the second position, the reflection plane of the movable reflector 52 is parallel to the first optical axis OA1, and the reflection plane of the movable reflector 52 forms a 45° included angle with the second optical axis OA2. In this case, the movable reflector 52 reflects the second light ray to the third lens group 30, and does not reflect the first light ray.

In some examples, the movable reflector 52 may be driven by any power component like a voice coil motor, a piezoelectric motor, a shape memory alloy motor, or a stepper motor to rotate between the first position and the second position.

For example, the first reflector 51 may be a reflection mirror or a prism.

Compared with the camera module 100 shown in FIG. 6 and FIG. 7, the light guide module 50 in this embodiment is configured to reflect the second light ray to the movable reflector 52 through the disposed first reflector 51, thereby reducing a movement range of the movable reflector 52. In this way, the movable reflector 52 can switch between the first light ray and the second light ray by only deflecting a reflection angle, without needing to move within a large range. Therefore, a driving design can be simplified, and a size of a lens assembly or a module can be reduced.

In some examples, the first reflector 51 may alternatively be disposed as a movable reflector, and can be driven by the power component to move. For example, when the movable reflector 52 is moved to the first position shown in FIG. 12, the first light ray from the first lens group 10 is reflected by the movable reflector 52 to the third lens group 30. In this case, the first reflector 51 may be driven to move, to reflect the second light ray from the second lens group 20 to a region other than the movable reflector 52. In this case, the second light ray does not reach the movable reflector 52, in other words, the movable reflector 52 does not reflect the second light ray, and the second light ray does not enter the third lens group 30. Under a reflection effect of the first reflector 51, the second light ray may be emitted to another region inside the electronic device 1000, and is absorbed or consumed. In this way, the movable reflector 52 does not need to consider an avoiding design for the second light ray while reflecting the first light ray, so that a degree of freedom of an optical path design can be increased, and difficulty of the optical path design can be reduced. In addition, when the first light ray is used for imaging, the second light ray is not introduced, so that interference of the second light ray to imaging can be effectively avoided, and an anti-interference effect is better. This helps improve imaging quality. For example, in this case, the second light ray may be reflected by the first reflector 51 to another rear lens group, or directly reflected to another image sensor. In other words, in this case, the electronic device 1000 may perform imaging by using both the first light ray and the second light ray.

In this embodiment, the movable reflector 52 is further configured to compensate for vibration to implement optical image stabilization. As shown in FIG. 12, when the movable reflector 52 is located at the first position, the movable reflector 52 can be driven by an image stabilization motor to perform optical image stabilization on the optical lens assembly 110 working in the first imaging mode. It should be noted that, in this case, the movable reflector 52 should not introduce the second light ray to the third lens group 30 or the image sensor 120 while performing jitter compensation, so as to avoid affecting imaging quality due to introduction of stray light.

As shown in FIG. 13, when the movable reflector 52 is located at the second position, the movable reflector 52 can be driven by the image stabilization motor to perform optical image stabilization on the optical lens assembly 110 working in the second imaging mode. It should be noted that, in this case, the movable reflector 52 should not introduce the first light ray to the third lens group 30 or the image sensor 120 while performing jitter compensation, so as to avoid affecting imaging quality due to introduction of stray light.

In some examples, the first reflector 51 is also configured to compensate for vibration to implement optical image stabilization. For example, the image stabilization motor may drive the first reflector 51 to translate or rotate, to compensate for vibration. In this way, image stabilization (namely, image stabilization for a lens assembly) of the movable reflector 52 and image stabilization of the first reflector 51 can be combined to obtain a better image stabilization effect, thereby further ensuring image shooting quality of the optical lens assembly 110 in the second imaging mode, and improving image shooting experience of the user.

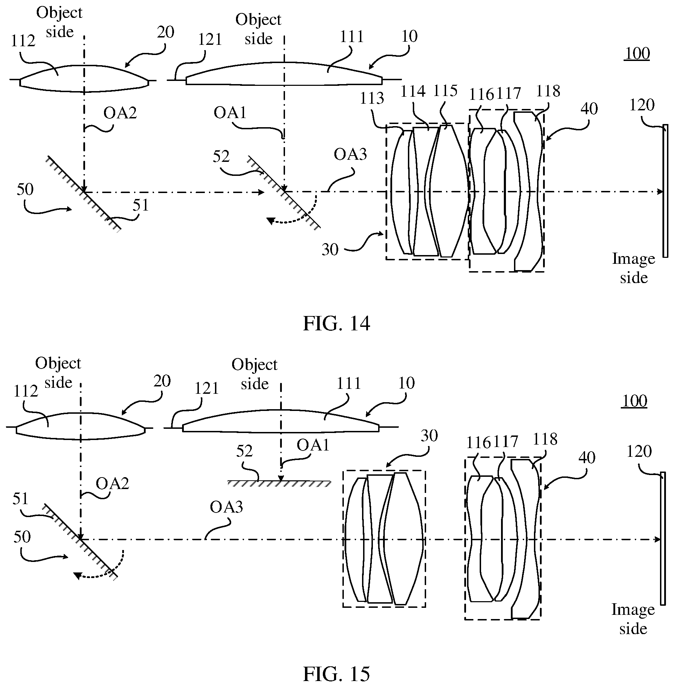

FIG. 14 is a diagram of still another structure of the camera module 100 in the first imaging mode according to an embodiment of this application. FIG. 15 is a diagram of a structure of the camera module 100 shown in FIG. 14 in a second imaging mode. As shown in FIG. 14 and

FIG. 15, in this embodiment, the light guide module 50 also includes the first reflector 51 and the movable reflector 52. However, functions of the first reflector 51 and the movable reflector 52 are different from functions of corresponding components in the camera module 100 shown in FIG. 12 and FIG. 13.

Specifically, as shown in FIG. 14 and FIG. 15, in this embodiment, the light guide module 50 includes the first reflector 51 and the movable reflector 52. The first reflector 51 is located between the second lens group 20 and the movable reflector 52, and is configured to reflect the second light ray to the third lens group 30. The movable reflector 52 may move between a first position and a second position (for example, rotate by using a left end part as an axis). When the movable reflector 52 is rotated to the first position shown in FIG. 14, the movable reflector 52 reflects the first light ray from the first lens group 10 to the third lens group 30, and shields the second light ray. In this case, the second light ray cannot reach the third lens group, and the optical lens assembly 110 enters the first imaging mode. When the movable reflector 52 is rotated to the second position shown in FIG. 15, the movable reflector 52 avoids the second light ray, and the second light ray smoothly reaches the third lens group 30 under a reflection effect of the first reflector 51. However, the first light ray is reflected by the movable reflector 52 to a region other than the third lens group 30. In this case, the optical lens assembly 110 enters the second imaging mode. A focal length of the first lens group 10 is different from that of the second lens group 20. The movable reflector 52 is controlled to rotate between the first position and the second position, so that an effective focal length of the optical lens assembly 110 can be changed, in other words, an optical zoom function is achieved.

When the movable reflector 52 is rotated to the first position shown in FIG. 14, the optical lens assembly 110 works in the first imaging mode. The first light ray from the first lens group 10 is reflected by the movable reflector 52 to the third lens group 30, and then is emitted to the image sensor 120 through the fourth lens group 40. However, the second light ray from the second lens group 20 is shielded by the movable reflector 52 and cannot enter the third lens group 30. For example, an opaque coating may be disposed on a back surface of the movable reflector 52 to absorb the second light ray, or the second light ray is reflected to a region other than the third lens group 30. In this case, the second light ray may be emitted to another region inside the electronic device 1000, and is absorbed or consumed.

When the movable reflector 52 is moved to the second position shown in FIG. 15, the optical lens assembly 110 works in the second imaging mode. The movable reflector 52 avoids the second light ray. For example, a reflective surface of the movable reflector 52 and the third optical axis OA3 are parallel to each other, and the second light ray is reflected by the first reflector 51 to the third lens group 30, and then is emitted to the image sensor 120 through the fourth lens group 40. However, the first light ray from the first lens group 10 is shielded by the movable reflector 52. For example, the first light ray is reflected to a region other than the third lens group 30, or the movable reflector 52 does not reflect the first light ray. In this case, the first light ray may be emitted to another region inside the electronic device 1000, and is absorbed or consumed.

In some examples, as shown in FIG. 14 and FIG. 15, the left end part of the movable reflector 52 may be disposed as a rotating shaft, and the movable reflector 52 rotates around the left end part. For example, the movable reflector 52 at the first position in FIG. 14 rotates counterclockwise by 45° by using the left end part as an axis, to reach the second position in FIG. 15. When the movable reflector 52 is located at the second position, the movable reflector 52 is adjacent to the first lens group 10, and the reflective surface and a lens plane of the first lens group 10 are parallel to each other. Further, the movable reflector 52 may rotate clockwise by 45° by using the left side part as an axis, to switch from the second position to the first position.

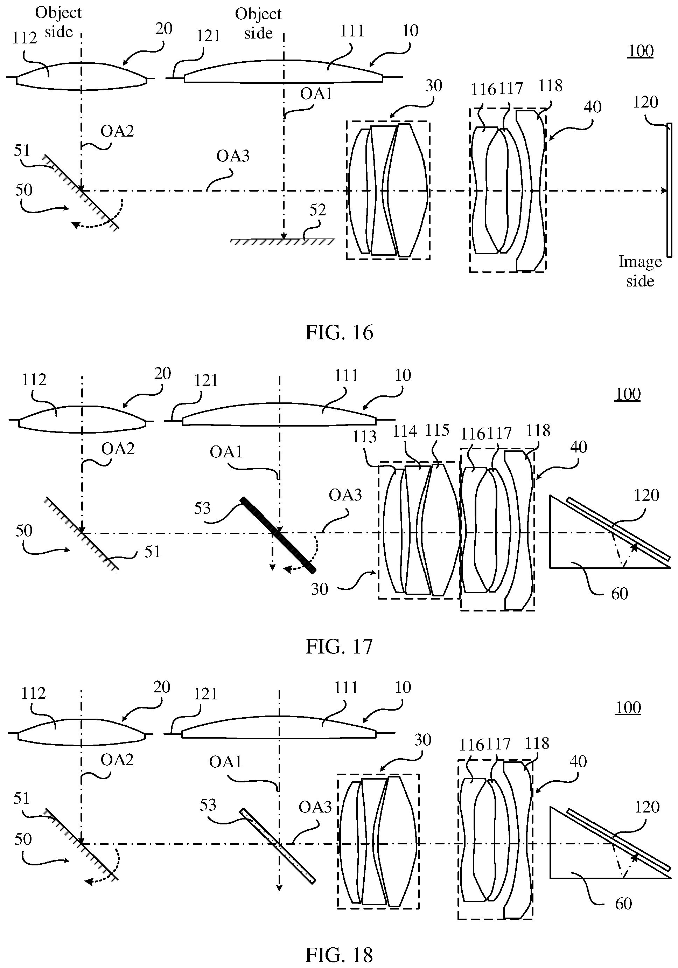

FIG. 16 is a diagram of a structure of the camera module 100 shown in FIG. 14 in the second imaging mode in another example. In some examples, as shown in FIG. 14 and FIG. 16, a right end part of the movable reflector 52 may also be disposed as a rotation axis, and the movable reflector 52 rotates around the right end part. For example, the movable reflector 52 at the first position in FIG. 14 rotates counterclockwise by 45° by using the right end part as an axis, to reach the second position in FIG. 16. When the movable reflector 52 is located at the second position, the movable reflector 52 is far away from the first lens group 10, and the reflective surface and a lens plane of the first lens group 10 are parallel to each other. Further, the movable reflector 52 may rotate clockwise by 45° by using the right end part as an axis, to switch from the second position to the first position.

In this embodiment, the first reflector 51 and the movable reflector 52 may be further configured to compensate for vibration to implement optical image stabilization.

As shown in FIG. 14, when the movable reflector 52 is located at the first position, the movable reflector 52 can be driven by an image stabilization motor to perform optical image stabilization on the optical lens assembly 110 working in the first imaging mode. It should be noted that, in this case, the movable reflector 52 should not introduce the second light ray to the third lens group 30 or the image sensor 120 while performing jitter compensation. In other words, it should be ensured that an effect of shielding the second light ray is not affected, so as to avoid affecting imaging quality due to introduction of stray light. As shown in FIG. 15, when the movable reflector 52 is located at the second position, the first reflector 51 can be driven by the image stabilization motor to perform optical image stabilization on the optical lens assembly 110 working in the second imaging mode.

FIG. 17 is a diagram of still another structure of the camera module 100 in the first imaging mode according to an embodiment of this application. FIG. 18 is a diagram of a structure of the camera module 100 shown in FIG. 15 in a second imaging mode. As shown in FIG. 17 and FIG. 18, in this embodiment, the light guide module 50 includes the first reflector 51 and a controllable transflective mirror 53.

Specifically, as shown in FIG. 17 and FIG. 18, in this embodiment, the light guide module 50 includes the first reflector 51 and the controllable transflective mirror 53. The first reflector 51 is located between the second lens group 20 and the controllable transflective mirror 53, and is configured to reflect the second light ray to the third lens group 30. The controllable transflective mirror 53 has a transmissive mode and a reflective mode, and can be switched between the transmissive mode and the reflective mode.

When the controllable transflective mirror 53 is controlled to enter the reflective mode shown in FIG. 17, the controllable transflective mirror 53 reflects the first light ray from the first lens group 10 to the third lens group 30, and reflects the second light ray from the second lens group 20 to a region other than the third lens group 30, in other words, the second light ray cannot reach the third lens group 30. In this case, the optical lens assembly 110 enters the first imaging mode. When the controllable transflective mirror 53 is controlled to enter the transmissive mode shown in FIG. 18, the second light ray is emitted into the third lens group 30 through the controllable transflective mirror 53, and the first light ray is emitted into a region other than the third lens group 30 through the controllable transflective mirror 53, in other words, the first light ray cannot reach the third lens group 30. In this case, the optical lens assembly 110 enters the second imaging mode. A focal length of the first lens group 10 is different from that of the second lens group 20. The controllable transflective mirror 53 is controlled to switch between the reflective mode and the transmissive mode, so that an effective focal length of the optical lens assembly 110 can be changed, in other words, an optical zoom function is achieved.

When the controllable transflective mirror 53 is controlled to enter the reflective mode shown in FIG. 17, the optical lens assembly 110 works in the first imaging mode. The first light ray from the first lens group 10 is reflected by the controllable transflective mirror 53 to the third lens group 30, and then is emitted into the image sensor 120 after sequentially passing through the fourth lens group 40 and the second reflector 60. However, the second light ray from the second lens group 20 is shielded by the controllable transflective mirror 53 (reflected to another direction) and cannot enter the third lens group 30. For example, the second light ray is reflected to another region inside the electronic device 1000, and is absorbed or consumed.

When the controllable transflective mirror 53 is controlled to enter the transmissive mode shown in FIG. 18, the optical lens assembly 110 works in the second imaging mode. The second light ray is emitted into the third lens group 30 through the controllable transflective mirror 53, and then is emitted into the image sensor 120 after sequentially passing through the fourth lens group 40 and the second reflector 60. However, the first light ray is emitted into a region other than the third lens group 30 through the controllable transflective mirror 53. For example, the first light ray is emitted into another region inside the electronic device 1000, and is absorbed or consumed.

In some examples, the controllable transflective mirror 53 may be switched between the reflective mode and the transmissive mode by changing a magnitude of a current or a voltage applied to the controllable transflective mirror 53. Alternatively, the mode of the controllable transflective mirror 53 may be controlled by powering on or off. For example, when there is no electrical signal, the controllable transflective mirror 53 is in the reflective mode, in other words, when not powered on, the controllable transflective mirror 53 is in the reflective mode. When an electrical signal is input, the controllable transflective mirror 53 is in the transmission state, in other words, when powered on, the controllable transflective mirror 53 is in the transmissive mode. The electrical signal herein may be a current signal or a voltage signal.

For example, the controllable transflective mirror 53 may include an electrically controlled liquid crystal material layer.

In this embodiment, the first reflector 51 and the controllable transflective mirror 53 may be further configured to compensate for vibration to implement optical image stabilization.

As shown in FIG. 17, when the controllable transflective mirror 53 is in the reflective mode, the controllable transflective mirror 53 can be driven by the image stabilization motor to perform optical image stabilization on the optical lens assembly 110 working in the first imaging mode. It should be noted that, in this case, the controllable transflective mirror 53 should not introduce the second light ray to the third lens group 30 or the image sensor 120 while performing jitter compensation. In other words, it should be ensured that an effect of shielding the second light ray is not affected, so as to avoid affecting imaging quality due to introduction of stray light. As shown in FIG. 18, when the controllable transflective mirror 53 is in the transmissive mode, the first reflector 51 can be driven by the image stabilization motor to perform optical image stabilization on the optical lens assembly 110 working in the second imaging mode.

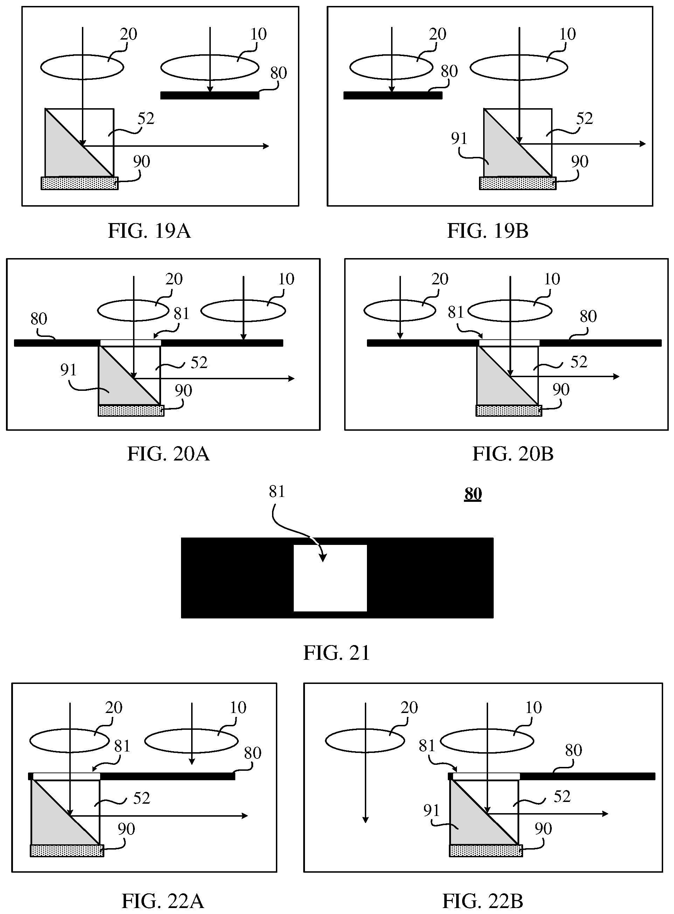

FIG. 19A and FIG. 19B are diagrams of still another structure of the camera module 100 according to an embodiment of this application. FIG. 19A is a diagram of a structure of the camera module 100 in the second imaging mode, and FIG. 19B is a diagram of a structure of the camera module 100 in the first imaging mode. The camera module 100 provided in this embodiment of this application may be considered as a more specific and subordinate implementation of the camera module 100 shown in FIG. 2, FIG. 6, and FIG. 7. For ease of understanding, components such as the rear lens group, the second reflector 60, and the image sensor 120 that are located on the image side of the movable reflector 52 (the light guide module 50) in the foregoing embodiments are not shown in FIG. 19A and FIG. 19B. The following continues to describe the structural details of the optical lens assembly 110 with reference to FIG. 19A and FIG. 19B.

As shown in FIG. 19A and FIG. 19B, in this embodiment of this application, the light guide module 50 includes the movable reflector 52, in other words, the movable reflector 52 is the foregoing light guide module 50, and the movable reflector 52 may be a prism (for example, a right-angle prism). The movable reflector 52 may be driven by a driving member 90 to perform position switching. The driving member 90 may be any power component like a voice coil motor, a piezoelectric motor, an electric motor, or a cylinder.

The movable reflector 52 is located between a front lens group and a rear lens group (not shown in the figure), and can move (for example, translate) between a first position and a second position. When the movable reflector 52 is located at a first position shown in FIG. 19B, the movable reflector 52 reflects the first light ray from the first lens group 10 to the rear lens group. In this case, the optical lens assembly 110 enters the first imaging mode. When the movable reflector 52 is located at a second position shown in FIG. 19A, the movable reflector 52 reflects the second light ray from the second lens group 20 to the rear lens group. In this case, the optical lens assembly 110 enters the second imaging mode. A focal length of the first lens group 10 is different from that of the second lens group 20. The movable reflector 52 is controlled to switch between the first position and the second position, so that an effective focal length of the optical lens assembly 110 can be changed, in other words, an optical zoom function is achieved.

In some examples, the driving member 90 can drive the movable reflector 52 to slide between the first position and the second position. For example, the movable reflector 52 is slidably disposed, through a mounting component like a mounting base 91, on a sliding rod or in a sliding groove that connects the first position to the second position, and can be driven by the driving member 90 to slide on the sliding rod or in the sliding groove, so as to ensure that the movable reflector 52 can quickly (for example, within 30 milliseconds) and stably implement position switching. For example, a U-shaped or V-shaped sliding groove is provided in the bottom of the mounting base 91, and the sliding groove is sleeved on the sliding rod. The movable reflector 52 is secured to the mounting base 91. The movable reflector 52 can implement long-stroke, fast, and stable position switching between the first position and the second position through the sliding groove and the sliding rod that are slidably fitted with each other.

In this embodiment of this application, the optical lens assembly 110 further includes a light shielding member. The light shielding member is any component that can shield a light ray, and the light shielding member may be constructed into any shape. For example, the light shielding member may be the light shielding plate 80 in FIG. 19A and FIG. 19B, or may be a component like a light shielding curtain. The light shielding member is configured to: When the movable reflector 52 is moved to the second position, the movable reflector 52 reflects the second light ray, and in this case, the light shielding member shields the first light ray, to prevent the first light ray from entering the movable reflector 52; and/or when the movable reflector 52 is moved to the first position, the movable reflector 52 reflects the first light ray, and in this case, the light shielding member shields the second light ray, to prevent the second light ray from entering the movable reflector 52.

In this way, when the optical lens assembly 110 performs imaging by using the first light ray (that is, working in the first imaging mode), the second light ray is not introduced, so that interference from the second light ray to imaging can be effectively avoided. When the optical lens assembly 110 performs imaging by using the second light ray (that is, working in the second imaging mode), the first light ray is not introduced, so that interference from the first light ray to imaging can be effectively avoided. This can avoid interference between different light rays, and avoid a problem that ghost images are formed on the image sensor 120 because light rays from different front lens groups simultaneously enter the image sensor 120. In other words, stray light is not introduced, and imaging quality can be improved.

In some examples, the light shielding member may shield only the first light ray. To be specific, when the movable reflector 52 is moved to the second position, the movable reflector 52 reflects the second light ray, and in this case, the light shielding member shields the first light ray, to prevent the first light ray from entering the movable reflector 52. However, when the movable reflector 52 is moved to the first position to reflect the first light ray, the light shielding member does not or does not need to shield the second light ray. The following embodiment shown in FIG. 22A and FIG. 22B further describes this case.

In some examples, the light shielding member may shield only the second light ray. To be specific, when the movable reflector 52 is moved to the first position, the movable reflector 52 reflects the first light ray, and in this case, the light shielding member shields the second light ray, to prevent the second light ray from entering the movable reflector 52. However, when the movable reflector 52 is moved to the second position to reflect the second light ray, the light shielding member does not or does not need to shield the first light ray.

In some examples, the light shielding member may shield both the first light ray and the second light ray. To be specific, when the movable reflector 52 is moved to the second position, the movable reflector 52 reflects the second light ray, and in this case, the light shielding member shields the first light ray, to prevent the first light ray from entering the movable reflector 52. In addition, when the movable reflector 52 is moved to the first position, the movable reflector 52 reflects the first light ray, and in this case, the light shielding member shields the second light ray, to prevent the second light ray from entering the movable reflector 52.

As shown in FIG. 19A and FIG. 19B, in this embodiment of this application, the light shielding member includes a position-changeable light shielding plate 80. The light shielding plate 80 can switch, for example, translate, between a third position and a fourth position, to shield the first light ray or the second light ray.

As shown in FIG. 19A, when the movable reflector 52 is moved to the second position, the optical lens assembly 110 works in the second imaging mode, and the movable reflector 52 reflects the second light ray from the second lens group 20. In this case, the light shielding plate 80 is moved to the third position to shield the first light ray, to ensure that the first light ray cannot enter the movable reflector 52. In this way, stray light can be prevented from entering the image sensor 120, and imaging quality of the optical lens assembly 110 can be improved.

As shown in FIG. 19B, when the movable reflector 52 is moved to the first position, the optical lens assembly 110 works in the first imaging mode, and the movable reflector 52 reflects the first light ray from the first lens group 10. In this case, the light shielding plate 80 is moved to the fourth position to shield the second light ray, to ensure that the second light ray cannot enter the movable reflector 52. In this way, stray light can be prevented from entering the image sensor 120, and imaging quality of the optical lens assembly 110 can be improved.

In this embodiment of this application, the position-changeable light shielding plate 80 is disposed to shield the first light ray or the second light ray, so that an optical path can be accurately controlled, and a good shielding effect can be ensured. In addition, a simple and easy-to-implement implementation method helps save lens assembly space and implementation costs. In addition, high running stability helps improve reliability of using the optical lens assembly 110.

As shown in FIG. 19A and FIG. 19B, the third position is located on an image side of the first lens group 10. When the light shielding plate 80 is located at the third position, a plate surface of the light shielding plate 80 faces the first lens group 10 to achieve a good light shielding effect. The fourth position is located on an image side of the second lens group 20. When the light shielding plate 80 is located at the fourth position, the plate surface of the light shielding plate 80 faces the second lens group 20 to achieve a good light shielding effect. In another example, the third position may also be located on an object side of the first lens group 10, and the fourth position may be located on an object side of the second lens group 20.

In some examples, the light shielding plate 80 may be made of various matte materials, frosted plastic, or matte-finished metal. A shape of the light shielding plate 80 may be a circle, an ellipse, a rectangle, or the like. This is not limited in this application.

In some examples, the light shielding plate 80 and the movable reflector 52 may alternatively be respectively driven by two different driving members.

In some examples, the light shielding plate 80 and the movable reflector 52 may be synchronously driven by a same driving member. For example, both the light shielding plate 80 and the movable reflector 52 are driven by the driving member 90.

In this way, the same driving member may be reused to switch positions of the light shielding plate 80 and the movable reflector 52. In other words, no additional driving component needs to be disposed to drive the light shielding plate 80, which helps save lens assembly space and implementation costs. In addition, the same driving member is used to implement synchronous driving, which helps quickly respond to a switching operation of the user, shorten time required for switching, and avoid affecting user experience due to inconsistent position switching steps.

In some examples, the driving member 90 is drivingly connected to both the light shielding plate 80 and the movable reflector 52. The driving member 90 may synchronously drive the light shielding plate 80 and the movable reflector 52 through a mechanism like a belt, a rope pulley, a roller, a connecting rod, or a gear rack mechanism.

FIG. 20A and FIG. 20B are diagrams of still another structure of the camera module 100 according to an embodiment of this application. FIG. 20A is a diagram of a structure of the camera module 100 in the second imaging mode, and FIG. 20B is a diagram of a structure of the camera module 100 in the first imaging mode. FIG. 21 is a diagram of a structure of the light shielding plate 80 according to an embodiment of this application.

As shown in FIG. 20A and FIG. 20B and FIG. 21, compared with the embodiment shown in FIG. 19A and FIG. 19B, in this embodiment, the light shielding plate 80 is secured to the movable reflector 52, in other words, the light shielding plate 80 and the movable reflector 52 are relatively fixed in position. For example, the light shielding plate 80 is secured to the mounting base 91, and the light shielding plate 80 is secured to the movable reflector 52 through the mounting base 91. In this case, the driving member 90 can drive, through the mounting base 91, the light shielding plate 80 and the movable reflector 52 to move synchronously. The light shielding plate 80 has a light leakage region 81, where the light leakage region 81 corresponds to the movable reflector 52 in position, and the light leakage region 81 can allow light to pass through and be emitted into the movable reflector 52. The light leakage region 81 may be a through hole, and may alternatively be a notch structure located on an edge of the light shielding plate 80.

As shown in FIG. 20A, when the movable reflector 52 is moved to the second position, the light shielding plate 80 is synchronously moved to the third position. In this case, the light leakage region 81 on the light shielding plate 80 is opposite to the second lens group 20, and the second light ray is emitted into the movable reflector 52 through the light leakage region 81. The movable reflector 52 reflects the second light ray, and a non-light leakage region (namely, a region on the right side of the light leakage region 81) of the light shielding plate 80 shields the first light ray.

As shown in FIG. 20B, when the movable reflector 52 is moved to the first position, the light shielding plate 80 is synchronously moved to the fourth position. In this case, the light leakage region 81 on the light shielding plate 80 is opposite to the first lens group 10, and the first light ray is emitted into the movable reflector 52 through the light leakage region 81. The movable reflector 52 reflects the first light ray, and another non-light leakage region (namely, a region on the left side of the light leakage region 81) of the light shielding plate 80 shields the second light ray.

In this embodiment of this application, the light shielding plate 80 is secured to the movable reflector 52. In this way, the two components can be synchronously driven by a same driving member (for example, the driving member 90), thereby saving lens assembly space and implementation costs, helping quickly respond to a switching operation of the user, and shortening time required for switching. The light leakage region 81 opposite to the movable reflector 52 is disposed on the light shielding plate 80. In this way, optical path gating can be implemented by changing a position of the light leakage region 81. In addition, due to existence of the light leakage region 81, the light shielding plate 80 can be disposed between the front lens group and the movable reflector 52, and the light shielding plate 80 can span from one side of the movable reflector 52 to the other side of the movable reflector 52, so that the light shielding plate 80 can be secured to the movable reflector 52, and a connection structure between the light shielding plate 80 and the movable reflector 52 is simplified. For example, in this case, the light shielding plate 80 may be secured to the mounting base 91 of the movable reflector 52, so that the light shielding plate 80 is secured to the movable reflector 52.

In some examples, the light leakage region 81 may be of a through hole structure, or may be a notch structure disposed on an edge of the light shielding plate 80. As shown in FIG. 21, the light shielding plate 80 is of a rectangular structure, the light leakage region 81 is of a through hole structure located in the middle of the light shielding plate 80, and the light leakage region 81 may be in a rectangular shape, a circular shape, an elliptical shape, or any other shape. In this embodiment of this application, the movable reflector 52 is a prism, the light shielding plate 80 is fixedly stacked (attached) on a light incident surface of the movable reflector 52 (namely, the prism), and the light leakage region 81 is directly opposite to the light incident surface. A shape of the light leakage region 81 may be the same as a shape of the light incident surface. For example, both the light leakage region 81 and the light incident surface are in a rectangular shape.

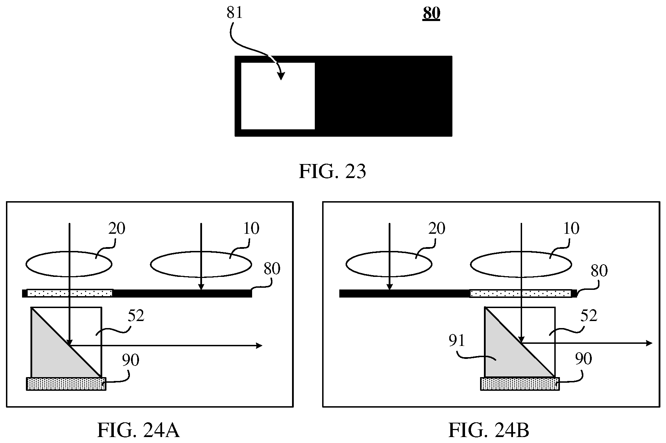

FIG. 22A and FIG. 22B are diagrams of still another structure of the camera module 100 according to an embodiment of this application. FIG. 22A is a diagram of a structure of the camera module 100 in the second imaging mode, and FIG. 22B is a diagram of a structure of the camera module 100 in the first imaging mode. FIG. 23 is a diagram of another structure of the light shielding plate 80 according to an embodiment of this application. As shown in FIG. 22A and FIG. 22B and FIG. 23, compared with the embodiments shown in FIG. 20A and FIG. 20B and FIG. 21, in this embodiment, the light leakage region 81 is disposed on a side edge adjacent to the light shielding plate 80, and the light shielding plate 80 is only configured to shield the first light ray, but cannot shield the second light ray.

As shown in FIG. 22A, when the movable reflector 52 is moved to the second position, the light shielding plate 80 is synchronously moved to the third position. In this case, the light leakage region 81 on the light shielding plate 80 is opposite to the second lens group 20, and the second light ray is emitted into the movable reflector 52 through the light leakage region 81. The movable reflector 52 reflects the second light ray, and a non-light leakage region (namely, a region on the right side of the light leakage region 81) of the light shielding plate 80 shields the first light ray.

As shown in FIG. 22B, when the movable reflector 52 is moved to the first position, the light shielding plate 80 is synchronously moved to the fourth position. In this case, the light leakage region 81 on the light shielding plate 80 is opposite to the first lens group 10, and the first light ray is emitted into the movable reflector 52 through the light leakage region 81. The movable reflector 52 reflects the first light ray, but cannot shield the second light ray because the light shielding plate 80 and the second lens group 20 are staggered in this case.

In consideration of a complex internal structure of the lens assembly, not all front lens groups may have a light shielding requirement. For example, in the first imaging mode shown in FIG. 22B, because a light ray emitted by the second lens group 20 is located on the back of the movable reflector 52 and is not easy to reach the reflective surface, and the mounting base 91 can shield the light ray to a specific extent, there is no need to additionally shield the second light ray. However, in the second imaging mode shown in FIG. 22A, the reflective surface of the movable reflector 52 faces the first lens group 10. The first light ray emitted by the first lens group 10 may be emitted into the reflective surface of the movable reflector 52 due to diffuse reflection. Therefore, the first light ray needs to be shielded. Therefore, in this embodiment, the light shielding plate 80 is only configured to shield the first light ray, and does not need to shield the second light ray. This can shorten an overall length of the light shielding plate 80, and miniaturize the camera module 100.

FIG. 24A and FIG. 24B are diagrams of still another structure of the camera module 100 according to an embodiment of this application. FIG. 24A is a diagram of a structure of the camera module 100 in the second imaging mode, and FIG. 24B is a diagram of a structure of the camera module 100 in the first imaging mode. In this embodiment of this application, the light shielding plate 80 has a light transmission mode and a light shielding mode in different regions, and may be switched between the light transmission mode and the light shielding mode.

As shown in FIG. 24A, when the movable reflector 52 is moved to the second position, a second region of the light shielding plate 80 corresponding to the second lens group 20 is switched to the light transmission mode, the second light ray is emitted to the movable reflector 52 through the second region, and a first region of the light shielding plate 80 corresponding to the first lens group 10 is switched to the light shielding mode to shield the first light ray. In this way, the first light ray can be prevented from entering the image sensor 120 as stray light, and imaging quality of the optical lens assembly 110 can be improved.

As shown in FIG. 24B, when the movable reflector 52 is moved to the first position, the first region of the light shielding plate 80 corresponding to the first lens group 10 is switched to the light transmission mode, the first light ray is emitted to the movable reflector 52 through the first region, and the second region of the light shielding plate 80 corresponding to the second lens group 20 is switched to the light shielding mode to shield the second light ray. In this way, the second light ray can be prevented from entering the image sensor 120 as stray light, and imaging quality of the optical lens assembly 110 can be improved.

In this embodiment of this application, in this way, light shielding effects in different regions can be achieved by changing light transmission attributes of the different regions. In this case, the light shielding plate 80 is static and does not need to be moved. Therefore, no driving design is required, which helps simplify an internal structure of the module.

In some examples, the region may be switched between the light transmission mode and the light shielding mode by changing a magnitude of a current or a voltage applied to different regions of the light shielding plate 80, or the modes of different regions may be controlled by powering on or off. In some cases, the first region and the second region of the light shielding plate 80 may be considered as two independent light shielding units that can be separately controlled. For example, for the first region, when there is no electrical signal, the first region is in the light shielding mode, in other words, when not powered on, the first region is in the light shielding mode. When an electrical signal is input, the first region is in a light transmission state, in other words, when powered on, the first region is in the light transmission mode. The electrical signal herein may be a current signal or a voltage signal.

For example, the first region and the second region of the light shielding plate 80 include an electrically controlled liquid crystal material layer that can be independently controlled.

For example, the light shielding mode herein may be the foregoing reflective mode, to be specific, a light shielding effect is achieved by reflecting a light ray to another region.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical lens assembly, comprising a first lens group (10), a second lens group (20), and a light guide module (50), wherein the optical lens assembly comprises a first imaging mode and a second imaging mode, wherein
the first lens group (10) and the second lens group (20) are disposed on an object side of the light guide module (50);
when the optical lens assembly is in the first imaging mode, the light guide module (50) is configured to reflect a first light ray from the first lens group (10) to an image sensor (120), and when the optical lens assembly is in the second imaging mode, the light guide module (50) is configured to reflect a second light ray from the second lens group (20) to the image sensor (120), wherein the optical lens assembly has an effective focal length in the first imaging mode different from that in the second imaging mode; and
the light guide module (50) is further configured to compensate for vibration to implement optical image stabilization.

2. The optical lens assembly according to claim 1, wherein a focal length of the first lens group (10) is ELFG1, a focal length of the second lens group (20) is ELFG2, the effective focal length of the optical lens assembly in the first imaging mode is ELF1, and the effective focal length of the optical lens assembly in the second imaging mode is ELF2, wherein ELFG1, ELFG2, ELF1, and ELF2 satisfy the following relationship: EFLG1/EFL1>0.5, EFLG2/EFL2>1.0, and EFL1<EFL2.

3. The optical lens assembly according to claim 1 or 2, wherein the optical lens assembly further comprises:
a rear lens group, located on an image side of the light guide module (50), and configured to: process a light ray from the light guide module (50), and emit the processed light ray to the image sensor (120).

4. The optical lens assembly according to claim 3, wherein the rear lens group comprises a third lens group (30) and a fourth lens group (40) that are sequentially arranged in a direction from an object side to an image side, and at least one of the third lens group (30) and the fourth lens group (40) is a focusing lens group that is movable along an optical axis.

5. The optical lens assembly according to claim 4, wherein one of the third lens group (30) and the fourth lens group (40) has a positive focal length, and the other has a negative focal length.

6. The optical lens assembly according to claim 4 or 5, wherein the optical lens assembly further comprises a second reflector (60) located on an image side of the fourth lens group (40), and the second reflector (60) is configured to reflect a light ray from the fourth lens group (40) to the image sensor (120).

7. The optical lens assembly according to claim 6, wherein the second reflector (60) comprises a prism (61), the prism (61) has an incident surface (613), a first reflective surface (611), and a second reflective surface (612), and the prism (61) is configured such that the light ray from the fourth lens group (40) is incident to the inside of the prism (61) through the incident surface (613), then is sequentially reflected by the first reflective surface (611) and the second reflective surface (612), and then is emitted from the first reflective surface (611) to the image sensor (120).

8. The optical lens assembly according to any one of claims 1 to 7, wherein the focal length of the first lens group (10) is different from that of the second lens group (20).

9. The optical lens assembly according to any one of claims 1 to 7, wherein an equivalent focal length of the optical lens assembly in the first imaging mode is F1, an equivalent focal length of the optical lens assembly in the second imaging mode is F2, and F1 and F2 satisfy the following relationship: 1<F2/F1<10.

10. The optical lens assembly according to any one of claims 1 to 9, wherein the light guide module (50) comprises:
a movable reflector (52) that is movable between a first position and a second position, wherein when located at the first position, the movable reflector (52) is configured to reflect the first light ray to the image sensor (120), and when located at the second position, the movable reflector (52) is configured to reflect the second light ray to the image sensor (120); and
the movable reflector (52) is further configured to compensate for vibration to implement optical image stabilization.

11. The optical lens assembly according to claim 10, wherein the light guide module (50) further comprises:
a first reflector (51), located between the second lens group (20) and the movable reflector (52), and configured to reflect the second light ray to the movable reflector (52).

12. The optical lens assembly according to any one of claims 1 to 9, wherein the light guide module (50) comprises a first reflector (51) and a movable reflector (52), wherein
the first reflector (51) is configured to reflect the second light ray to the image sensor (120); and
the movable reflector (52) is movable between a first position and a second position, wherein when located at the first position, the movable reflector (52) reflects the first light ray to the image sensor (120) and shields the second light ray, and when located at the second position, the movable reflector (52) avoids the second light ray; and
the first reflector (51) and the movable reflector (52) are further configured to compensate for vibration to implement optical image stabilization.

13. The optical lens assembly according to any one of claims 1 to 9, wherein the light guide module (50) comprises a first reflector (51) and a controllable transflective mirror (53), wherein
the first reflector (51) is configured to reflect the second light ray to the image sensor (120); and
the controllable transflective mirror (53) is located between the first reflector (51) and the image sensor (120), and the controllable transflective mirror (53) has a transmissive mode and a reflective mode, wherein in the reflective mode, the controllable transflective mirror (53) reflects the first light ray to the image sensor (120) and shields the second light ray, and in the transmissive mode, the second light ray is emitted to the image sensor (120) through the controllable transflective mirror (53); and
the first reflector (51) and the controllable transflective mirror (53) are further configured to compensate for vibration to implement optical image stabilization.

14. A camera module, comprising an image sensor (120) and the optical lens assembly according to any one of claims 1 to 13, wherein the optical lens assembly is configured to project a light ray onto the image sensor (120).

15. A camera module, comprising a rear lens group, a prism (61), and an image sensor (120), wherein
the rear lens group has a third optical axis (OA3);
the prism (61) has an incident surface (613), a first reflective surface (611), and a second reflective surface (612), and the prism (61) is configured such that a light ray from the rear lens group is incident to the inside of the prism (61) through the incident surface (613), then is sequentially reflected by the first reflective surface (611) and the second reflective surface (612), and then is emitted from the first reflective surface (611) to the image sensor (120); and
a photosensitive surface (122) of the image sensor (120) faces the first reflective surface (611), wherein the photosensitive surface (122) is disposed obliquely relative to the third optical axis (OA3), and the image sensor (120) is further configured to compensate for vibration to implement optical image stabilization.

16. The camera module according to claim 15, wherein an included angle between the photosensitive surface (122) and the third optical axis (OA3) is θ, and 15°≤θ<45°.

17. The camera module according to claim 15 or 16, wherein the second reflective surface (612) and the third optical axis (OA3) are parallel to each other, an included angle between the first reflective surface (611) and the incident surface (613) is α, and an included angle between the first reflective surface (611) and the second reflective surface (612) is β, wherein 0°≤|α-2β|≤10°.

18. The camera module according to any one of claims 15 to 17, wherein the camera module further comprises a first lens group (10), a second lens group (20), and a light guide module (50), and the camera module comprises a first imaging mode and a second imaging mode, wherein
the first lens group (10) and the second lens group (20) are disposed on an object side of the light guide module (50); and
when the camera module is in the first imaging mode, the light guide module (50) is configured to reflect a first light ray from the first lens group (10) to the rear lens group, and when the camera module is in the second imaging mode, the light guide module (50) is configured to reflect a second light ray from the second lens group (20) to the rear lens group, wherein the camera module has an effective focal length in the first imaging mode different from that in the second imaging mode.

19. The camera module according to any one of claims 15 to 17, wherein the camera module further comprises:
a third reflector (63), located on an object side of the rear lens group, and configured to reflect a light ray to the rear lens group.

20. The camera module according to any one of claims 15 to 19, wherein the rear lens group comprises a third lens group (30) and a fourth lens group (40) that are sequentially arranged along the third optical axis (OA3), and at least one of the third lens group (30) and the fourth lens group (40) is a focusing lens group that is movable along the third optical axis (OA3).

21. An electronic device, wherein the electronic device comprises the camera module according to any one of claims 14 to 20.
